# EUROPEAN PATENT APPLICATION

(11) **EP 3 109 970 A1**
(43) Date of publication of application: **28.12.2016**
(21) Application number: 15749419.6
(22) Date of filing: 12.02.2015
(51) Int. Cl.: H02J 50/00

(54) **POWER SUPPLY SYSTEM**

(30) Priority: 13.02.2014 JP 2014025971
(71) Applicant: ExH Corporation, Chiba 270-1356 (JP)
(72) Inventor: HARAKAWA, Kenichi, Inzai-shi Chiba 270-1356 (JP)
(74) Representative: Cabinet Plasseraud
(86) International application number: PCT/JP2015/053778
(87) International publication number: WO 2015/122439

(57) **Abstract**

The present invention provides a power supply system that is superior to existing systems. Provided is a power supply system that supplies, via a shaft that is supported by a first bearing and a second bearing, power to a prescribed load from an alternating current power source, said power supply system making it possible to transmit power mutually between a body (15) and an outer conductor of a rotating shaft (2) via a first coupling capacitor that is composed of a sliding bearing outer ring (11) and sliding interface (13) of the first bearing, and the outer conductor of the rotating shaft (2), and also making it possible to transmit power mutually between a connecting conductive wire (14) and an inner conductor (9) of the rotating shaft (2) via a second coupling capacitor that is composed of the sliding bearing outer ring (11), sliding interface (13), and sliding bearing inner ring (12) of the second bearing.

## Description

### TECHNICAL FIELD

The present invention relates to a power supply system for supplying power to various loads.

### BACKGROUND ART

In general, power supply systems that supply power to a load provided in a rotating body can be broadly classified into a contact-type power supply system in which an electrode is brought into contact from outside with an electrode provided in a rotating body in an exposed manner to supply power to the electrode and a non-contact-type power supply system in which power is supplied to an electrode provided in a rotating body in a non-exposed manner without making contact with the electrode.

Among these power supply systems, a conventional contact-type power supply system is disclosed in Patent Document 1, for example. In this system, an electrode called a slip ring is provided in a rotating body, an electrode called a brush is provided outside the rotating body, and the slip ring and the brush make sliding-contact with each other whereby power is transmitted.
Patent Document 1: Japanese Unexamined Patent Application, Publication No.H06-282801

### DISCLOSURE OF THE INVENTION

### Problems to be Solved by the Invention

However, the conventional system has the following problems.
(1) Since a conductive collector ring and a conductive brush or the like make contact with each other, conductive wear particles are generated. Due to this, it is necessary to frequently perform maintenance (removal of waste).
(2) The collector ring and the brush are both conductive materials and power can be transmitted by bringing into contact with each other. Due to this, when the system is wet with water, the film of water enter into the space between the collector ring and the brush particularly when the rotating body rotates at high speed, and power transmission efficiency decreases.
(3) Since the collector ring and the brush are exposed, when the slip ring is used in an acid or alkali environment, and acid or alkali liquid or gas touches the collector ring or the brush, corrosion may occur.
(4) The collector ring and the brush make contact at one point. Although a number of brushes may be disposed to be distributed on the circumference of the collector ring, the contact point is distributed to only several points. That is, since power is transmitted via several points, when the system is used in a non-rotating state, a partial portion may be heated and the collector ring and the brushes themselves may deteriorate. Thus, it is difficult to use the system in a fixed state. Moreover, in order to use the system in a fixed state, it is necessary to use a slip ring having a long shape in a longitudinal direction of the rotating body.
(5) When a structure which prevents water or gas from entering into the slip ring is employed, high mechanical accuracy is required and the manufacturing cost increases. However, even when a high-quality rubber packing is inserted into a rolling bearing portion, it is not possible to block water or gas completely. Furthermore, there is another problem that the friction against rotation increases.

In view of the foregoing, an object of the present invention is to provide a power supply system that is superior to existing systems.

### Means for Solving the Problems

In order to solve the problems and attain the object, a power supply system according to claim 1 is a power supply system that supplies power from an AC power source to a prescribed load via a shaft supported by a first bearing and a second bearing, wherein the shaft includes: an inner shaft conductor disposed along an axial direction; an outer shaft conductor disposed along the axial direction so as to cover the inner conductor; and a shaft insulator disposed between the inner shaft conductor and the outer shaft conductor, the first bearing includes:
a first bearing body that receives a load of the shaft; a first outer bearing fixed at a position of the first bearing body facing an outer circumferential surface of the outer shaft conductor; and a first sliding insulating layer disposed between the first outer bearing and the outer shaft conductor, the second bearing includes: a second insulating layer fixed to an outer circumferential surface of the outer shaft conductor; a second inner bearing fixed to an outer circumferential surface of the second insulating layer; a second outer bearing disposed at a position facing the second inner bearing; a second sliding insulating layer disposed between the second inner bearing and the second outer bearing; a second outer wire connected to the second outer bearing; and a second inner wire that electrically connects the second inner bearing and the inner shaft conductor through a wire hole formed in the outer shaft conductor, power can be transmitted between the first bearing body and the outer shaft conductor via a first coupling capacitor that includes the first outer bearing, the first sliding insulating layer, and the outer shaft conductor, and power can be transmitted between the second outer wire and the inner shaft conductor via a second coupling capacitor that includes the second outer bearing, the second sliding insulating layer, and the second inner bearing.

### Effects of the Invention

According to the power supply system of claim 1, power can be transmitted between the first bearing body and the outer shaft conductor via a first coupling capacitor that includes the first outer bearing, the first sliding insulating layer, and the outer shaft conductor, and power can be transmitted between the second outer wire and the inner shaft conductor via a second coupling capacitor that includes the second outer bearing, the second sliding insulating layer, and the second inner bearing. Therefore, since the conductive materials do not make contact with each other, the maintenance is not necessary or a maintenance interval can be extended greatly. Moreover, no particular problem occurs even when water enters into the power-transmitting bearing due to the electric field coupling. Particularly, since water is a ferroelectric material having a dielectric constant of 80, it is possible to strengthen the coupling force by electric field. Furthermore, no particular problem occurs even when the shaft rotates at high speed. Moreover, since all elements in the first and second bearings can be covered by an insulating layer, the insulating layer does not deteriorate even when acid or alkali enters into these bearings as long as the insulating layer has acid and alkali resistance. Therefore, a design which allows entrance of water, acid, and alkali can be provided, and the manufacturing cost can be reduced. Furthermore, since electric field coupling is realized on the entire circumference of the inner shaft conductor and the outer shaft conductor, power can be transmitted regardless of whether the shaft is stationary or rotating.

### BRIEF DESCRIPTION OF THE DRAWINGS

FIGS. 1A and 1B are cross-sectional views illustrating a bearing that fixes a rotating shaft.
FIGS. 2A and 2B are cross-sectional views illustrating a state in which a plurality of bearings is attached to a rotating shaft.
FIGS. 3A and 3B are cross-sectional views illustrating a power supply system when power is transmitted.
FIG. 4A is cross-sectional view illustrating a configuration of a power supply system.
FIG. 5 is a cross-sectional view illustrating a configuration of a power supply system.
FIG. 6 is a cross-sectional view illustrating a configuration of a power supply system.
FIG. 7 is a cross-sectional view illustrating a configuration of a power supply system.
FIG. 8 is a cross-sectional view illustrating a configuration of a power supply system.
FIG. 9 is a cross-sectional view illustrating a configuration of a power supply system.
FIG. 10 is a cross-sectional view illustrating a configuration of a power supply system.
FIGS. 11A and 11B are cross-sectional views illustrating a configuration of a movable sliding bearing.
FIG. 12 is a cross-sectional view illustrating a configuration of a movable sliding bearing.
FIGS. 13A and 13B are cross-sectional views illustrating a configuration of a power supply system.
FIG. 14 is a circuit diagram of a power supply system.
FIG. 15 is a circuit diagram of a power supply system.
FIG. 16 is a circuit diagram of a power supply system.
FIG. 17 is a diagram illustrating a configuration of a power supply system used when toxic gas is present inside an isolation wall.
FIG. 18 is a diagram illustrating a configuration of a power supply system used when the inside of an isolation wall is in a vacuum state.
FIG. 19 is a diagram illustrating a configuration of a power supply system used when the inside of an isolation wall is in a high pressure state.
FIG. 20 is a diagram illustrating a configuration of a power supply system used when preventing leakage of electromagnetic waves in an isolation wall.
FIG. 21 is a diagram illustrating a configuration of a power supply system to which a slip ring extension unit is attached.
FIG. 22 is a diagram illustrating a configuration of a power supply system to which a motor is attached.
FIG. 23A is a cross-sectional view illustrating a configuration of a rotating shaft that performs power transmission and communication.
FIG. 23B is a cross-sectional view illustrating a configuration of a rotating shaft that performs power transmission and communication.
FIG. 24 is a cross-sectional view illustrating a configuration of a rotating shaft that performs power transmission and communication.
FIG. 25 is a cross-sectional view illustrating a configuration of a rotating shaft that performs power transmission and communication.
FIG. 26 is a cross-sectional view illustrating a configuration of a rotating shaft that performs power transmission and communication.
FIG. 27 is a cross-sectional view illustrating a configuration of a rotating shaft that performs power transmission and communication.
FIG. 28 is a cross-sectional view illustrating a configuration of a rotating shaft that performs power transmit and communication and is a circuit diagram which enables power transmission and communication.
FIG. 29 is a schematic view illustrating an example in which a rotating shaft that performs power transmission and communication is applied to a hinge of a door.
FIG. 30 is a perspective view of the door hinge illustrated in FIG. 29.
FIG. 31 is a cross-sectional view illustrating a configuration in which two rotating shafts are both fixed.
FIG. 32 is a cross-sectional view illustrating a configuration in which two rotating shafts are fixed.
FIG. 33 is a cross-sectional view illustrating a configuration in which three rotating shafts are both fixed.
FIG. 34 is a cross-sectional view illustrating a configuration in which two rotating shafts are both fixed.
FIG. 35 is a cross-sectional view illustrating a configuration in which two rotating shafts are both fixed and to which a motor is attached.
FIG. 36 is a cross-sectional view illustrating a configuration in which two rotating shafts are both fixed.
FIG. 37 is a cross-sectional view illustrating a configuration in which two rotating shafts are both fixed.
FIG. 38 is a cross-sectional view illustrating a configuration in which two rotating shafts are both fixed.
FIG. 39 is a schematic view illustrating an example in which the rotating shaft illustrated in FIG. 38 is applied to a motor-assisted bicycle.
FIG. 40 is a cross-sectional view illustrating a configuration of a telescopic shaft that performs power transmission and communication.
FIG. 41 is a cross-sectional view illustrating a configuration of a telescopic shaft that performs power transmission and communication.
FIG. 42 is a cross-sectional view illustrating a configuration of a telescopic shaft that performs power transmission and communication.
FIG. 43 is a cross-sectional view illustrating a configuration of a telescopic shaft that performs power transmission and communication and is a circuit diagram which enables power transmission and communication.
FIG. 44 is a cross-sectional view illustrating a configuration of a two-row piston that performs power transmission and communication.
FIG. 45 is a perspective view illustrating a slip ring.
FIG. 46 is a diagram illustrating a configuration of a wire.
FIG. 47 is a diagram illustrating a configuration of a wire.
FIG. 48 is a diagram illustrating a configuration of a wire.
FIG. 49 is a diagram illustrating a configuration of a wire.
FIGS. 50A and 50B are cross-sectional views illustrating a configuration of a power supply system which uses a rolling bearing.
FIG. 51 is a diagram illustrating the flow of current and an electric field around one bearing ball when high-frequency current flows into a general rolling bearing and an equivalent circuit thereof.
FIG. 52 is a diagram illustrating a bearing ball or a bearing roller coated with an insulating layer, an electric field around the roller, and an equivalent circuit thereof.
FIG. 53A and 53B are diagrams illustrating a bearing ball or a bearing roller in which a holder and a shield are provided.
FIG. 54 is a diagram illustrating a configuration in which high-frequency current flows directly into a rolling bearing to transmit power.
FIG. 55 is a diagram illustrating a configuration in which power is transmitted to a rolling bearing via a resonator circuit.
FIG. 56 is a diagram illustrating a configuration in which a rolling bearing is changed to an electric field coupling-type rolling bearing.
FIG. 57 is a diagram illustrating an example in which a rolling bearing and a sliding bearing are combined.

### PREFERRED MODE FOR CARRYING OUT THE INVENTION

Hereinafter, embodiments of a power supply system according to the present invention will be described in detail with reference to the drawings in the following order:
(1) Basic concept of power supply system;
(2) Configuration of power supply system;
(3) Configuration of circuit used in power supply system;
(4) Configuration of power supply system when adaptation to installation environment is taken into consideration;
(5) Configuration of rotating shaft that performs power transmission and communication;
(6) Configuration of shaft of telescopic system that performs power transmission and communication;
(7) Configuration of wiring;
(8) Configuration of power supply system which uses rolling bearing; and
(9) Modification. Note that the present invention is not limited to these embodiments.

### (1) Basic concept of power supply system

First, a basic concept of a power supply system according to an embodiment of the present invention will be described. A power supply system according to the present embodiment is a power supply system for supplying power to a prescribed load provided in a rotating body that rotates in relation to a power source (or a movable body or the like that moves in relation to a power source). An application target of this power supply system is arbitrary and can be applied in order to supply power to a rotating body via a rotating connection portion which includes a shaft and a bearing, for example, when supplying power to an arm of an industrial robot, when supplying power to a monitoring camera that performs a swing operation, or when supplying power to a rotating portion of a tower crane.

### (Principle of power supply system)

Next, the principle of a power supply system according to the present embodiment, found by the present inventor will be described.

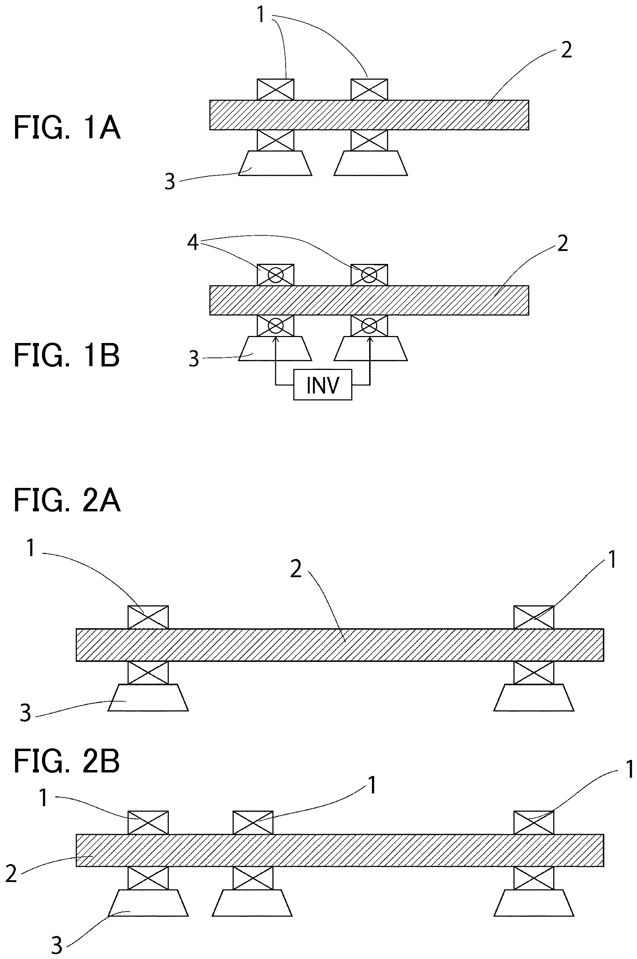

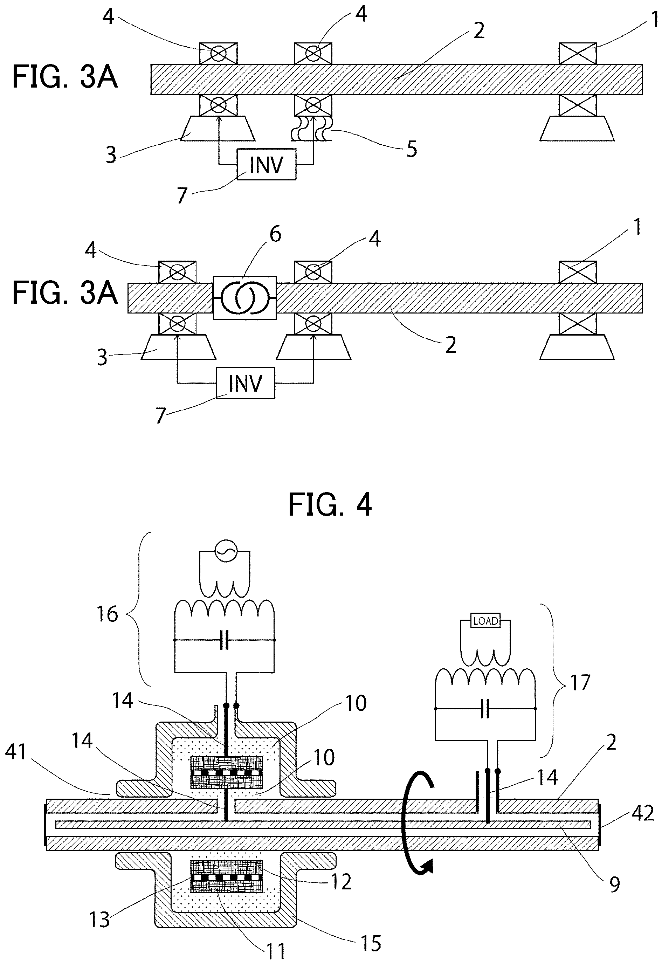

FIGS. 1A and 1B are cross-sectional views illustrating a bearing that supports a rotating shaft. FIGS. 2A and 2B are cross-sectional views illustrating a state in which a plurality of bearings is attached to a rotating shaft. FIGS. 3A and 3B are cross-sectional views illustrating a power supply system when power is transmitted.

As illustrated in FIG. 1A, a power supply system includes a rotating shaft 2 and two bearings 1. Here, the rotating shaft 2 is formed using a metal material (specifically, a conductive material) to secure strength, for example. Moreover, the two bearings 1 are formed using an existing bearing such as, for example, a sliding bearing or a rolling bearing, and are fixed to a bearing attachment portions 3 which can fix the bearings 1 tightly.

Moreover, as illustrated in FIG. 1B, when power is supplied from a power source (specifically, an alternating current (AC) power source) to a prescribed load via a rotating shaft 2 and two conductive bearings 4, a conductive bearing 4 on a side from which power is transmitted among the two conductive bearings 4 is preferably disposed near a conductive bearing 4 on a side in which positive and negative-polarity power flows. This is because it is possible to suppress unnecessary wires from creeping from a power source and to reduce a radiation electromagnetic field.

Moreover, like the power supply system illustrated in FIG. 2A, when the distance between two mutual bearings 1 is relatively long, the following problems occur. Specifically, when various force act on a portion of the rotating shaft 2 corresponding to the position between the mutual two bearings 1, the rotating shaft 2 may be bent and expansion of the rotating shaft 2 may occur due to heat, for example. In this case, force in an axial direction (the axial direction of the rotating shaft 2) as well as force in a radial direction (the direction approximately orthogonal to the axial direction of the rotating shaft 2) acts on the bearing 1. Therefore, for example, as illustrated in FIG. 2B, when another bearing 1 that supports the rotating shaft 2 is provided between two bearings 1 and the additional bearing 1 is fixed to the bearing attachment portion 3, since the stress applied to the additional bearing 1 is very larger than the stress applied to the other bearings 1, the additional bearing 1 may be destroyed.

A configuration illustrated in FIGS. 3A and 3B may be used as a configuration capable of eliminating such a problem. Specifically, as illustrated in FIG. 3A, three bearings are attached to the rotating shaft 2. Moreover, each of the two bearings 1 positioned at both ends of the group of three bearings 1 are fixed to the bearing attachment portion 3, and the bearing 1 positioned in the middle of these three bearings 1 is fixed to a bearing attachment portion 5 which can fix the bearing 1 more softly than the bearing attachment portion 3. With this configuration, the bearing 1 on the side from which power is transmitted can be disposed near the bearing 1 on the side in which positive and negative-polarity power flows. In this case, the bearing is not used as a bearing that receives the shaft load such as a radial load and an axial load but as a bearing that transmits power.

Moreover, as illustrated in FIG. 3B, three bearings 1 are attached to the rotating shaft 2, and each of these three bearings 1 is fixed to the bearing attachment portion 3. Moreover, a coupling 6 which functions as a hinge is provided in a portion of the rotating shaft 2 corresponding to the mutual position between the left bearing 1 and the additional bearing 1. With this configuration, it is possible to reduce the stress applied to the bearing 1 positioned in the middle of these three bearings 1 as compared to when the coupling 6 is not provided in the rotating shaft 2. Moreover, when the coupling 6 is formed of an insulating material, it is possible to supply power to a load without causing short-circuiting.

The power supply system of the present invention is formed based on the above-described configuration.

### (2) Configuration of power supply system

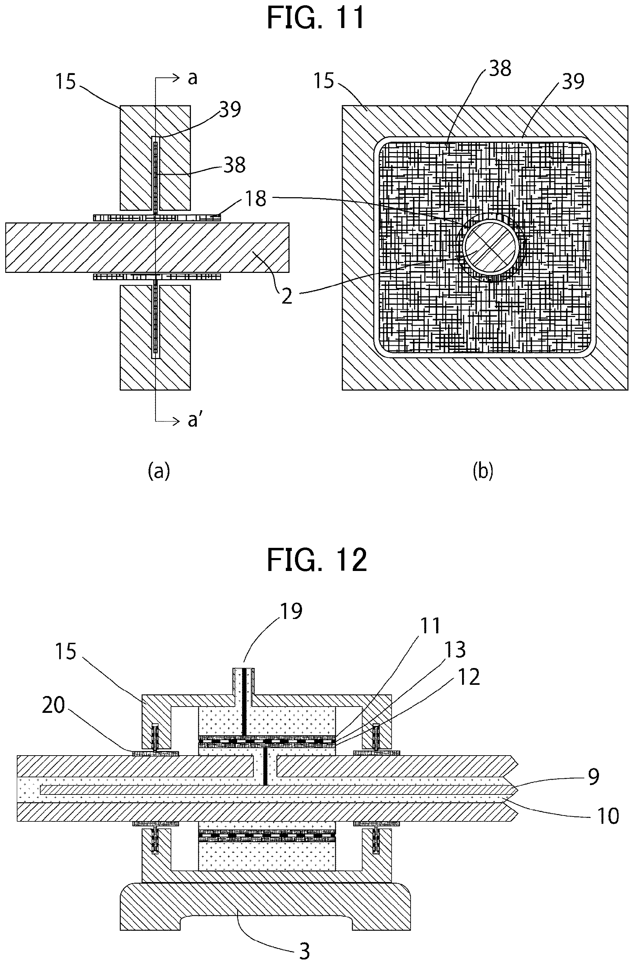

Next, a configuration of the power supply system will be described. FIGS. 4A and 4B to FIG. 10 and FIGS. 13A and 13B are cross-sectional views illustrating a configuration of the power supply system. FIGS. 11A and 11B and FIG. 12 are cross-sectional views illustrating a configuration of a movable sliding bearing described later.

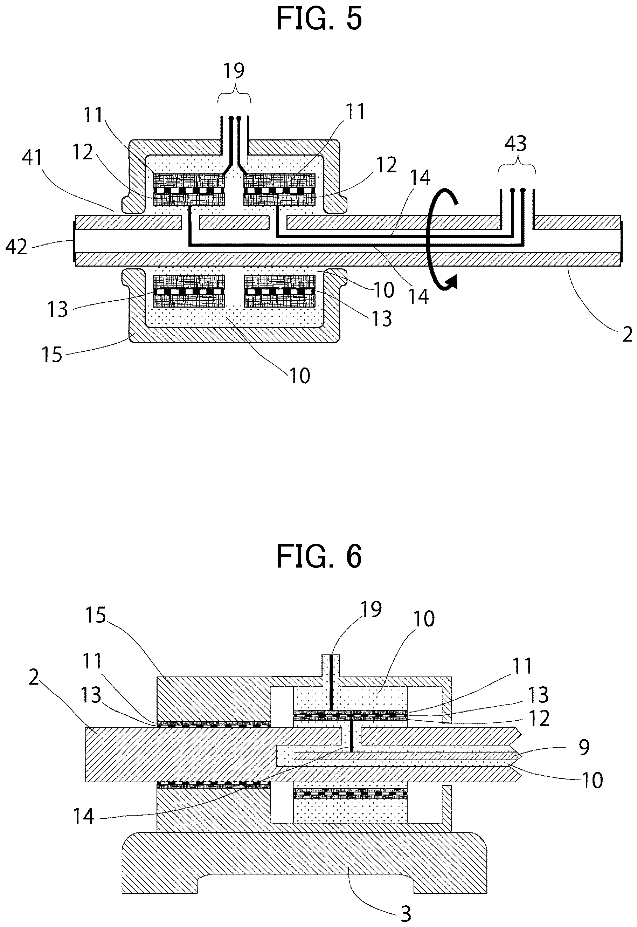

Power supply systems illustrated in FIGS. 4A and 4B and FIG. 5 are systems capable of transmitting power to the rotating shaft 2 at one power feeding terminal unlike the power supply system illustrated in FIGS. 3A and 3B. In these systems, a general bearing and a bearing block are provided at the right end of the rotating shaft 2. It is assumed that these bearing and bearing block receive a radial load and an axial load.

First, in the power supply system illustrated in FIGS. 4A and 4B, a coaxial line structure is used as the configuration of the rotating shaft 2. Specifically, the rotating shaft 2 having the coaxial line structure includes an inner conductor 9 (inner shaft conductor) having a long shape, an outer conductor (outer shaft conductor) having a long shape and disposed outside the inner conductor 9 in a concentric form in relation to the inner conductor 9, and an insulator 10 (shaft insulator) disposed mutually between the inner conductor 9 and the outer conductor so as to insulate mutually the inner conductor 9 and the outer conductor. Moreover, a power-feeding bearing block is provided at the left end of the rotating shaft 2. The power-feeding bearing block includes a sliding bearing inside a body 15 and is connected to a power source outside the body 15. Here, the sliding bearing includes a sliding bearing inner ring 12 and a sliding bearing outer ring 11. The sliding bearing inner ring 12 is disposed in a state of being insulated from the rotating shaft 2 and is electrically connected to the inner conductor 9 of the rotating shaft 2 via a connecting conductive wire 14. The sliding bearing outer ring 11 is disposed to cover the sliding bearing inner ring 12 and is in contact with the sliding bearing inner ring 12 with an insulating low-friction material (for example, Teflon (registered trademark) or the like) interposed therebetween. Moreover, the power source supplies power from a coaxial input terminal 19 which is grounded to the body 15 to the sliding bearing. This power is transmitted to a load along a route that passes through the sliding bearing and the inner conductor 9 and a route that is connected to the load via a gap 41 formed between the body 15 and the rotating shaft 2.

Here, in the power supply system illustrated in FIGS. 4A and 4B, a coupling capacitance can be increased by decreasing the length of the gap 41 which is formed between the body 15 and the rotating shaft 2 and increasing the length of a sleeve of the body 15, covering the rotating shaft 2. However, in this case, there is a problem that processing of the sleeve of the body 15 requires high accuracy. Another problem is that, when bending or the like of the rotating shaft 2 occurs, the sleeve may come into contact with the rotating shaft 2. Still another problem is that, since the sliding bearing is fixed to the body 15 and the rotating shaft 2 with the insulator 10 interposed therebetween, the durability of the sliding bearing is inferior to the durability of the bearing formed using a metal material only.

Moreover, although the power supply system illustrated in FIG. 5 has approximately the same configuration as the power supply system illustrated in FIGS. 4A and 4B, two sliding bearings are provided in the body 15. In this configuration, like the system illustrated in FIG. 2B, when large stress is applied to the right sliding bearing among the two sliding bearings due to bending or the like of the rotating shaft 2, the right sliding bearing may be destroyed. Therefore, in order to avoid such destruction, the two sliding bearings are fixed to the body 15 and the rotating shaft 2 via the insulator 10 having an elastic property. With this configuration, even when bending or the like of the rotating shaft 2 occurs, since the stress applied to the two sliding bearings can be reduced by the insulator 10, it is possible to avoid the destruction of the sliding bearings.

Here, a problem of the power supply system illustrated in FIG. 5 is that, since the insulator 10 is used, the rigidity of the power-feeding bearing block decreases. Another problem is that the body 15 and the rotating shaft 2 may make contact with each other. Still another problem is that a radiation electromagnetic field may increase when the gap which is formed between the sleeve and the rotating shaft 2 is open.

The following configuration may be used as a configuration capable of eliminating the problems of the power supply systems illustrated in FIGS. 4A and 4B and FIG. 5.

A power supply system illustrated in FIG. 6 is a system used when a power-feeding bearing block is provided at only one end of the rotating shaft 2. A coaxial input terminal 19 is attached to the body 15 (first bearing body) of the power-feeding bearing block via a wire hole formed in the body 15. The ground of the coaxial input terminal 19 is coupled with a sliding bearing (first bearing) provided on the left inner side of the body 15, that is, a sliding bearing (specifically, a sliding bearing outer ring 11 (first outer bearing)) which is directly attached to the body 15. Since the sliding bearing is in direct contact with the body 15, the sliding bearing can support the rotating shaft 2 directly and the same strength as a general sliding bearing is obtained. Moreover, a sliding interface 13 (first sliding insulating layer (for example, a sliding material or the like having an insulating property)) is provided between the sliding bearing and the rotating shaft 2.

Due to this, power can be transmitted between the body 15 and the outer conductor of the rotating shaft 2 via a first coupling capacitor including the sliding bearing outer ring 11, the sliding interface 13, and the body 15. Moreover, a connecting conductive wire (second outer wire) of the coaxial input terminal 19 is connected to a sliding bearing outer ring 11 (second outer bearing) of the sliding bearing (second bearing) provided on the right inner side of the body 15. The sliding bearing outer ring 11 is fixed to the body 15 with the insulator 10 interposed therebetween. As described above, since the power-feeding bearing block is provided at only one end of the rotating shaft 2, it is necessary to fix the portions of the body 15 corresponding to the two sliding bearings using the bearing attachment portion 3. Moreover, the sliding bearing outer ring 11 is in contact with a sliding bearing inner ring 12 (second inner bearing) with the sliding interface 13 (second sliding insulating layer) interposed therebetween, and the sliding bearing inner ring 12 is fixed to the rotating shaft 2 with the insulator 10 (second insulating layer) interposed therebetween. Moreover, a conductive wire (second inner wire) for electrically connecting the sliding bearing inner ring 12 and the inner conductor 9 of the rotating shaft 2 via a wire hole formed in the outer conductor of the rotating shaft 2 is provided between the sliding bearing inner ring 12 and the inner conductor 9 of the rotating shaft 2. Due to this, power can be transmitted between the connecting conductive wire 14 and the inner conductor 9 of the rotating shaft 2 via a second coupling capacitor including the sliding bearing outer ring 11, the sliding interface 13, and the sliding bearing inner ring 12. The above-described flow of power was confirmed, that is, it is confirmed that when the sliding bearing is surrounded inside the body 15, surface current rarely flows outside and power flows into the inner conductor 9 of the rotating shaft 2 via the inner space of the body 15 by electromagnetic field simulation.

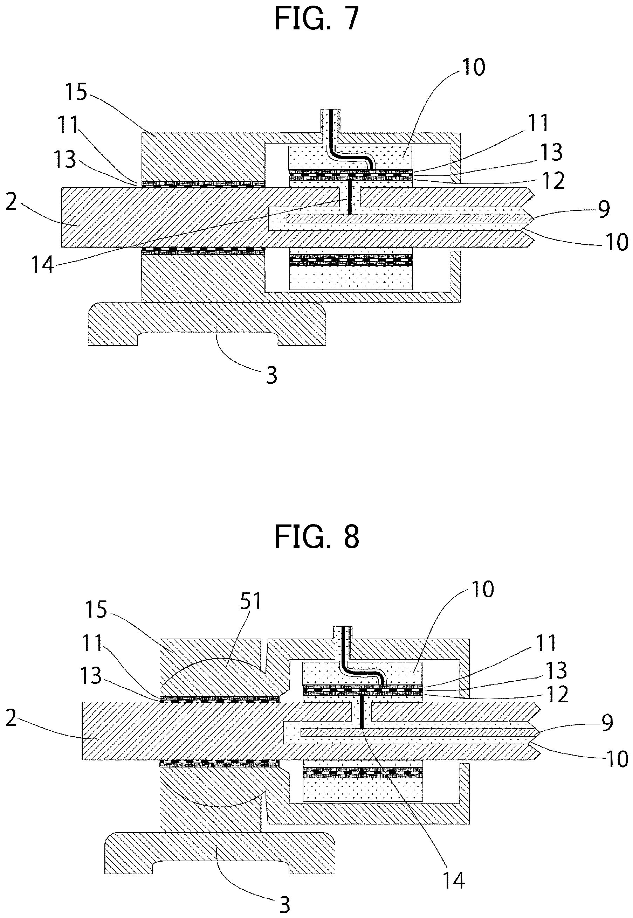

A power supply system illustrated in FIG. 7 is a system used when a power-feeding bearing block is provided at both ends of the rotating shaft 2. This power supply system has substantially the same configuration as the power supply system illustrated in FIG. 6, and a power-feeding bearing block is disposed at the left end of the rotating shaft 2. Moreover, the sliding bearing disposed on the right inner side of the body 15 of the power-feeding bearing block is not fixed to the body 15 with the insulator 10 interposed therebetween, but a gap is formed between the insulator 10 and the body 15. As described above, since the power-feeding bearing block is provided at both ends of the rotating shaft 2, only a portion of the body 15 corresponding to the left sliding bearing (specifically, the sliding bearing outer ring 11) is fixed by the bearing attachment portion 3. Due to this configuration, the connecting conductive wire 14 of the coaxial input terminal 19 can follow the movement of the left sliding bearing.

A power supply system illustrated in FIG. 8 has substantially the same configuration as the power supply system illustrated in FIG. 7, and the sliding bearing (specifically, the sliding bearing outer ring 11), disposed on the left inner side of the body 15 is fixed to the body 15 of the power-feeding bearing block with gimbals 51 interposed therebetween. With this configuration, an automatic alignment function can be provided.

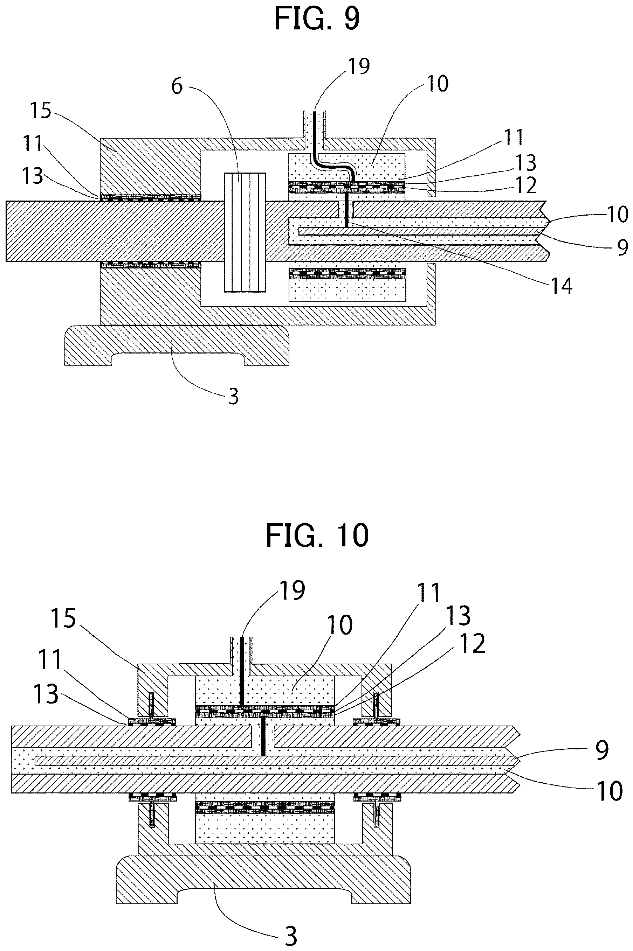

A power supply system illustrated in FIG. 9 has substantially the same configuration as the power supply system illustrated in FIG. 7, and a coupling 6 is provided in a portion of the rotating shaft 2 corresponding to the position between the two sliding bearings. As a specific configuration of the coupling 6, a disc, beam, or bellows-type coupling capable of flowing electricity is employed. However, since the coupling 6 has particular electrical constants (for example, resistance R, inductance L, capacitor C, and the like) depending on the type thereof, it is necessary to adjust a power transmission/reception circuit according to the electrical constant. Moreover, when the coaxial line (specifically, a portion including the inner conductor 9, the insulator 10, and the outer conductor) in the rotating shaft 2 is further extended toward the left side of the rotating shaft 2, a coaxial coupling 6 may be used. The coaxial coupling 6 can be formed using a bellows-type coupling, a stacked disc or a pipe formed of wire mesh, or the like, for example.

A power supply system illustrated in FIG. 10 is an improvement of the power supply system illustrated in FIGS. 4A and 4B and has substantially the same configuration as the power supply system illustrated in FIG. 6, and three sliding bearings are disposed inside the body 15 of the power-feeding bearing block. The sliding bearings (specifically, the sliding bearing outer rings 11) disposed respectively at both ends of the body 15 among these three sliding bearings are bearings that are movable in relation to the body 15, and these sliding bearings and the body 15 are capacitively coupled (or may be coupled by wires). These sliding bearings function as an electric field coupling electrode and an electromagnetic wave leakage prevention shield for the rotating shaft 2. Moreover, the sliding bearing disposed in the middle of these three sliding bearings is fixed to the body 15 with the insulator 10 interposed therebetween and includes a sliding bearing outer ring 11 and a sliding bearing inner ring 12 that makes contact with the sliding bearing outer ring 11 with a sliding interface 13 interposed therebetween. Here, specifically, engineering plastic is assumed as a material of the insulator 10 and relatively high mechanical strength which is not as high as a metal material is obtained. The sliding bearing functions as a member that receives a load applied from the rotating shaft 2. The configuration of the power supply system illustrated in FIG. 10 is arbitrary. For example, a configuration in which the sliding bearings at both ends of the body 15 receive a load, the middle sliding bearing is movable, and a coupling is provided between the sliding bearings at the ends of the rotating shaft 2 and the middle sliding bearing may be employed. Alternatively, a configuration in which one of the sliding bearings at both ends is fixed, and the other of the sliding bearings at both ends and the middle sliding bearing are movable may be employed.

Here, the details of the movable sliding bearing used in the power supply system illustrated in FIG. 10 will be described. As illustrated in FIGS. 11A and 11B, a metallic guide plate 38 is fixed to a movable sliding bearing outer ring 18 which is a sliding bearing. Moreover, a guidance groove 39 that accommodates the guide plate 38 is formed in a side surface of the body 15 facing the movable sliding bearing outer ring 18. Furthermore, a gap for allowing the guide plate 38 to be movable in an up-down direction and allowing the guide plate 38 and the body 15 to be capacitively coupled is formed between the guidance groove 39 and the guide plate 38. A surface of the guide plate 38 or a side surface of the body 15 corresponding to the guidance groove 39 may be coated with an electromagnetic wave absorbing material or the like in order to reduce electromagnetic wave leakage.

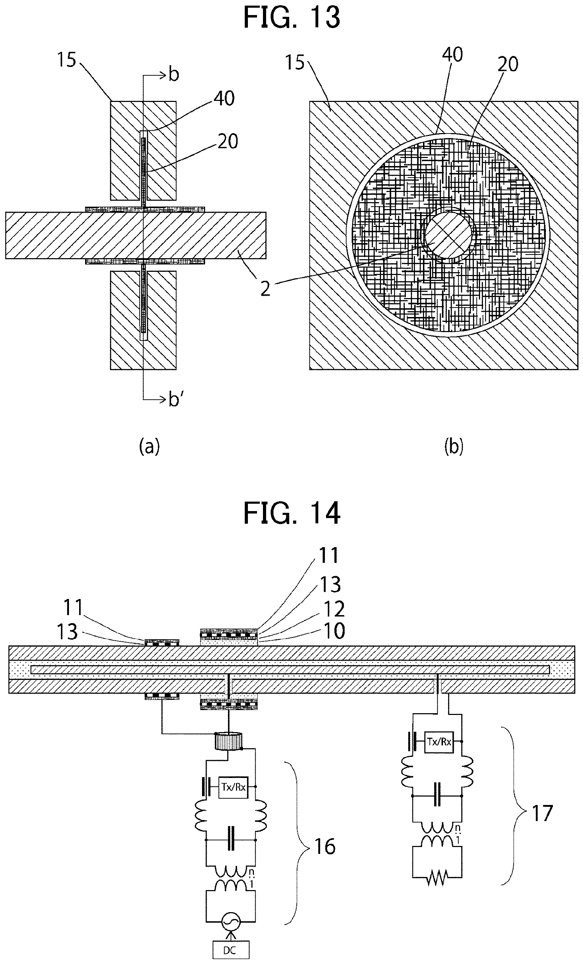

A power supply system illustrated in FIG. 12 has substantially the same configuration as the power supply system illustrated in FIG. 10, and a shaft adhesion rotating disc 20 is provided instead of the sliding bearings at both ends of the body 15. A shaft is connected to the upper surface of the shaft adhesion rotating disc 20. As illustrated in FIGS. 13A and 13B, a rotating groove 40 is formed in a side surface of the body 15 corresponding to the shaft adhesion rotating disc 20, and the shaft adhesion rotating disc 20 is disposed so that the shaft is accommodated in the rotating groove 40. Moreover, a gap is formed between the shaft and the rotating groove 40 so that the shaft adhesion rotating disc 20 can move along a left-right direction when the shaft is expanded and contracted due to temperature or the like. Due to this configuration, it is possible to rotate the shaft adhesion rotating disc 20 according to rotation of the shaft. A side surface of the body 15 corresponding to the rotating groove 40 or the surface of the shaft adhesion rotating disc 20 may be coated with an electromagnetic wave absorbing material or the like in order to reduce electromagnetic wave leakage.

### (3) Configuration of circuit used in power supply system

Next, a configuration of a circuit used in the power supply system will be described. FIGS. 14 to 16 are circuit diagrams of the power supply system.

The circuits illustrated in FIGS. 14 to 16 are attached to the power supply system illustrated in FIG. 6, for example, and include a power transmission and communication circuit 16 and a power receiving and communication circuit 17. In these circuits, since a rotating shaft having the coaxial line is used, the power transmission and communication circuit 16 transmits power using two electrodes formed by connecting the sliding bearing inner ring 12 of the sliding bearing provided on the right inner side of the body 15 and the inner conductor 9 in the rotating shaft and by using the rotating shaft itself as the sliding bearing inner ring 12. Specifically, power is transmitted in such a way that an inverter having obtained a direct current (DC) power source generates a prescribed frequency, boosts up voltage using a transformer, and transmits the power via a parallel resonator circuit. In a period in which power is transmitted, a transceiver generates a communication signal having a frequency which is two to three order or more higher than the transmission frequency via a choke coil and a capacitance coupling portion 58. The size of the choke coil may be set to be appropriate for series resonance, for example. Moreover, the load of the power receiving and communication circuit 17 receives power from the inner conductor 9 in the rotating shaft and the rotating shaft itself. In FIGS. 14 to 16, although only a resistor is illustrated as the load, the load may include a rectification circuit, a smoothing circuit, a charging circuit, a battery, a load, a control circuit, or the like as necessary, for example.

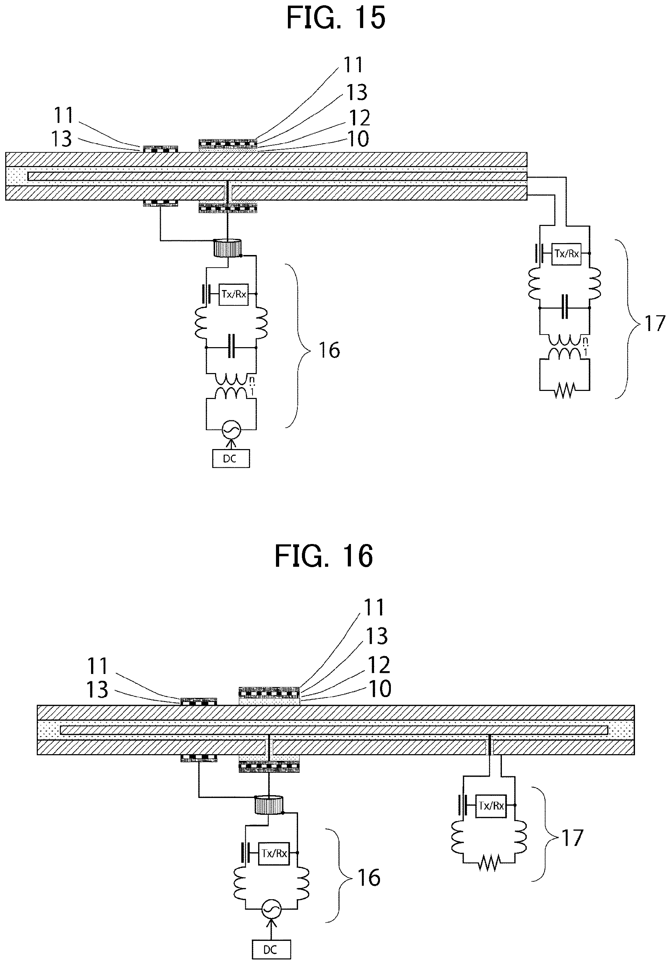

The circuit illustrated in FIG. 14 has a structure in which a through-hole is formed in the rotating shaft and power is taken out from the coaxial line of the rotating shaft. Moreover, the circuit illustrated in FIG. 15 has a structure in which power is taken out from the end of the rotating shaft.

The circuit illustrated in FIG. 16 has a structure in which a transformer and a parallel resonance unit are not used in a power transmission circuit and a power receiving circuit other than a communication circuit system and only a series resonance inductance is used in the power transmission and receiving circuit. The series resonance inductance is disposed so that the inductance and the coupling capacitance of the sliding bearing satisfy a resonance condition. Specifically, the inductance is disposed to be distributed to the power transmission circuit and the power receiving circuit at such a position that the inductance functions as a choke coil so that the output from the communication circuit does not flow into the inverter power source and the load. Due to this configuration, a simple configuration as compared to the configuration of the circuits illustrated in FIGS. 14 and 15 can be obtained unless the coupling capacitance in the transmission line varies greatly.

### (4) Configuration when adaptation to installation environment is taken into consideration

Next, a configuration of a power supply system when adaptation to an installation environment is taken into consideration will be described. When the power supply system is actually used, it is necessary to use the power supply system with a configuration which can be adapted to each environments. Here, in the conventional system, since a sliding bearing portion is a portion in which it is very difficult to provide sealing against gas, liquid, electromagnetic waves, and the like, it is difficult to shield the sliding bearing portion completely. In contrast, in the sliding bearing of the power supply system according to the present embodiment, since the sliding bearing inner ring 12, the sliding bearing outer ring 11, and the connecting conductive wire 14 that form the sliding bearing can be covered by a protective film, the sliding bearing provides a significant merit as compared to the slip ring. Since this protective film is formed of an insulating material such as, for example, Teflon (registered trademark), Alumite, and various dielectric films such as a DLC (diamond like carbon) film, the protective film can function as a dielectric member or a sliding member.

On the other hand, the power-feeding bearing block of the power supply system according to the present embodiment allows transmission of gas, liquid, electromagnetic waves, or the like through a sliding bearing. This is because, when a parallel resonator circuit is used in this power supply system, even if the coupling capacitance of the sliding bearing changes due to a dielectric material provided between the sliding bearing inner ring 12 and the sliding bearing outer ring 11, the influence on the power transmission is small. Moreover, even when a series resonator circuit is used in this power supply system, when the dielectric material provided between the sliding bearing inner ring 12 and the sliding bearing outer ring 11 is formed of a material having a low dielectric constant other than water, the influence on the power transmission is small.

As described above, since it is assumed that the sliding bearing transmits gas or the like, a configuration which takes a countermeasure against this is required. Therefore, the configuration which takes this countermeasure will be described below.

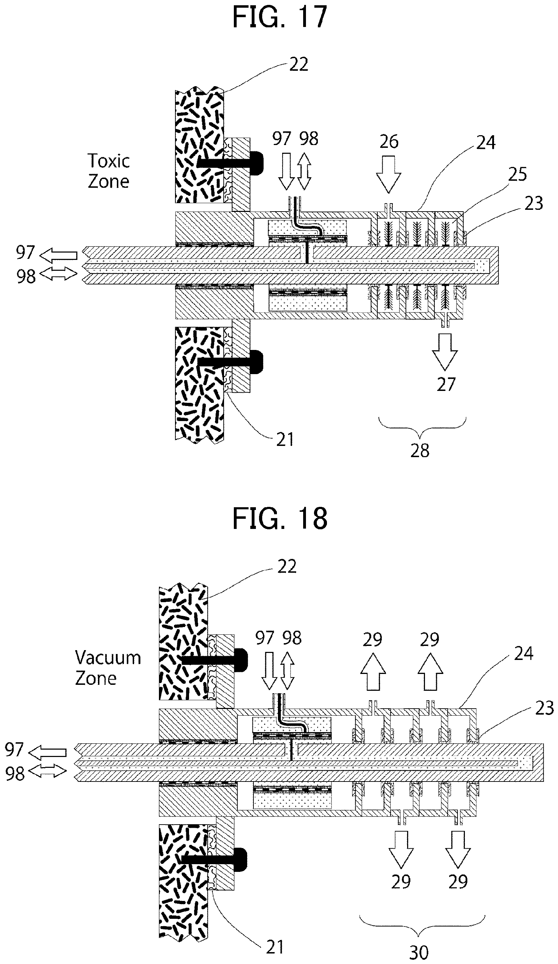

FIG. 17 is a diagram illustrating a configuration of a power supply system used when toxic gas is present inside an isolation wall. The power supply system illustrated in FIG. 17 is used when toxic gas is present inside the isolation wall 22. Toxic gas is present on the inner side (the left side of the isolation wall 22 in the drawing) of the isolation wall 22, and the pressure is set to a high pressure state as compared to atmospheric pressure. On the other hand, harmless air only is present on the outer side (the right side of the isolation wall 22 of the drawing) of the isolation wall 22, and the pressure is set to an atmospheric pressure state. Moreover, this power supply system has substantially the same configuration as the power supply system illustrated in FIG. 16, and the power-feeding bearing block and the rotating shaft have the following configuration. Specifically, the power-feeding bearing block is disposed so that a portion of the power-feeding bearing block is inserted into a through-hole formed in the isolation wall 22, and another partial portion of the power-feeding bearing block is attached to the isolation wall 22 by a connecting member or the like. Moreover, the rotating shaft is used, for example, for agitating the toxic gas in the isolation wall 22 and is used as a path for power feeding and communication in relation to a device that performs temperature adjustment, ultraviolet irradiation, sensing, or the like. The rotating shaft is disposed so as to extend from the inside of the isolation wall 22 to reach the outside of the isolation wall 22 through a through-hole of the isolation wall 22. Moreover, the rotating shaft has a coaxial line, and the coaxial line is formed so as to extend from one end in the longitudinal direction of the rotating shaft to reach the other end in the longitudinal direction of the rotating shaft.

Three-stage extension blocks 24 are provided at a position inside the power-feeding bearing block on the opposite side of the isolation wall 22, and an agitation fin 25 is rotatably fixed to the inner side of each of the three-stage extension blocks 24. Moreover, an inlet for filling a neutralizing agent 26 is formed in the extension block 24 closest to the isolation wall 22 among the three-stage extension blocks 24, and an outlet from which a mixture described later detoxified by the three-stage extension blocks 24 is discharged is formed in the extension block 24 farthest from the isolation wall 22. A material of the neutralizing agent 26 is arbitrary, and a material capable of preventing corrosion of a protective film attached to the sliding bearing when the neutralizing agent 26 flows into the sliding bearing of the power-feeding bearing block is preferably used, for example. Moreover, a rotation seal 23 for preventing leakage of toxic gas is attached between the extension blocks 24. Due to this configuration, when the sliding bearing of the power-feeding bearing block transmits toxic gas, the neutralizing agent 26 and the toxic gas can be mixed in the extension block 24 closest to the isolation wall 22, neutralization of toxic gas by the neutralizing agent 26 can be accelerated in the central extension block 24, and a detoxified mixture can be discharged from the extension block 24 farthest from the isolation wall 22. Therefore, even when toxic gas or liquid flows into the power-feeding bearing block, it is possible to detoxify the toxic gas or liquid and to discharge the detoxified gas or liquid outside the isolation wall 22.

FIG. 18 is a diagram illustrating a configuration of a power supply system used when the inside of the isolation wall 22 is in a vacuum state. The power supply system illustrated in FIG. 18 is used when the inside of the isolation wall 22 is in a vacuum state (or a low pressure state). The pressure on the inner side of the isolation wall 22 is set to a vacuum state and the pressure on the outer side of the isolation wall 22 is set to an atmospheric pressure state. This power supply system has substantially the same configuration as the power supply system illustrated in FIG. 17, and four-stage extension blocks 24 is provided instead of the three-stage extension blocks 24. Specifically, an exhaust port through which inside air is discharged is formed in each of the four-stage extension blocks 24. Moreover, a rotation seal 23 for preventing air from flowing from the outer side of the isolation wall 22 toward the inner side of the isolation wall 22 is attached to a portion of each extension block 24 facing the body 15 and the rotating shaft (or a portion facing an adjacent block). The inside of each extension block 24 is set in a vacuum state (evacuation of air is performed for the individual extension blocks 24 using a prescribed pipe or the like). Due to this configuration, since exhaust of air 29 for operation of the rotating shaft can be performed, it is possible to prevent air from flowing from the outer side of the isolation wall 22 toward the inner side of the isolation wall 22. The number of stages of the extension blocks 24 illustrated in FIG. 18 may be set according to the degree of the vacuum state of the inside of the isolation wall 22, for example.

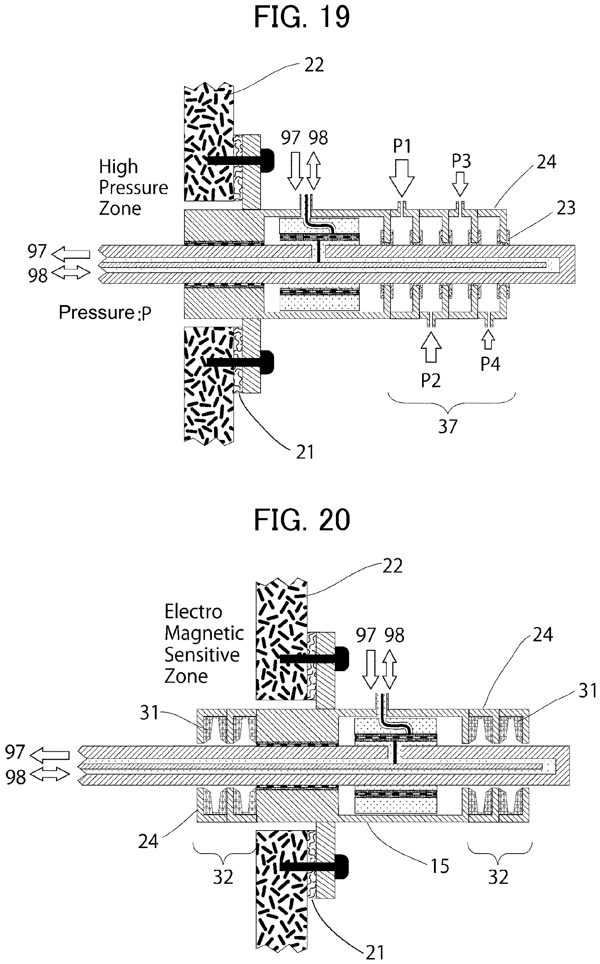

FIG. 19 is a diagram illustrating a configuration of a power supply system used when the inside of the isolation wall 22 is in a high pressure state. The power supply system illustrated in FIG. 19 is used when the inside of the isolation wall 22 is in a high pressure state. The pressure on the inner side of the isolation wall 22 is set to a high pressure state as compared to the atmospheric pressure and the pressure on the outer side of the isolation wall 22 is set to an atmospheric pressure state. This power supply system has substantially the same configuration as the power supply system illustrated in FIG. 18, and the pressure of the inside of each extension block 24 is set in the following manner. Specifically, when the pressure inside the isolation wall 22 is P, the pressure inside the extension block 24 closest to the isolation wall 22 is set to P1 which is almost equal to P. The pressure inside the extension block 24 which is the next closest to the isolation wall 22 is set to P2 which is lower than P1 so that the rotation seal 23 is not removed due to the pressure difference between the pressure inside the extension block 24 and the pressure inside the extension block 24 closest to the isolation wall 22. The pressure inside the extension block 24 which is the next closest to the isolation wall 22 is set to P1, and the pressure inside the extension block 24 farthest from the isolation wall 22 is set to P2. Due to this configuration, since a pressure difference can be formed in the four-stage extension blocks 24, it is possible to prevent the air inside the isolation wall 22 from leaking outside the isolation wall 22 even when the pressure inside the isolation wall 22 is in a high pressure state.

FIG. 20 is a diagram illustrating a configuration of a power supply system used when preventing leakage of electromagnetic waves inside the isolation wall 22. The power supply system illustrated in FIG. 20 is used when preventing leakage of electromagnetic waves inside the isolation wall 22. It is assumed that various electromagnetic measurements are performed inside the isolation wall 22 and an antenna or a turntable provided inside the isolation wall 22 is operated or rotated using the rotating shaft. This power supply system has substantially the same configuration as the power supply system illustrated in FIG. 19, and two sets of two-stage extension blocks 24 are provided instead of the four-stage extension blocks 24. Specifically, one of the two sets of two-stage extension blocks 24 is disposed on the inner side of the isolation wall 22, and is attached to an end of the power-feeding bearing block close to the isolation wall 22. The other of the two sets of two-stage extension blocks 24 is disposed on the outer side of the isolation wall 22 and is attached to an end of the power-feeding bearing block on the opposite side of the isolation wall 22. An electric wave absorbing member 31 is provided inside each extension block 24. Due to this configuration, it is possible to prevent electromagnetic waves from leaking from the inner side of the isolation wall 22 toward the outer side of the isolation wall 22. Moreover, even when the power-feeding bearing block itself performs inverter output, it is possible to prevent this output from leaking toward the inner side of the isolation wall 22 or the outer side of the isolation wall 22.

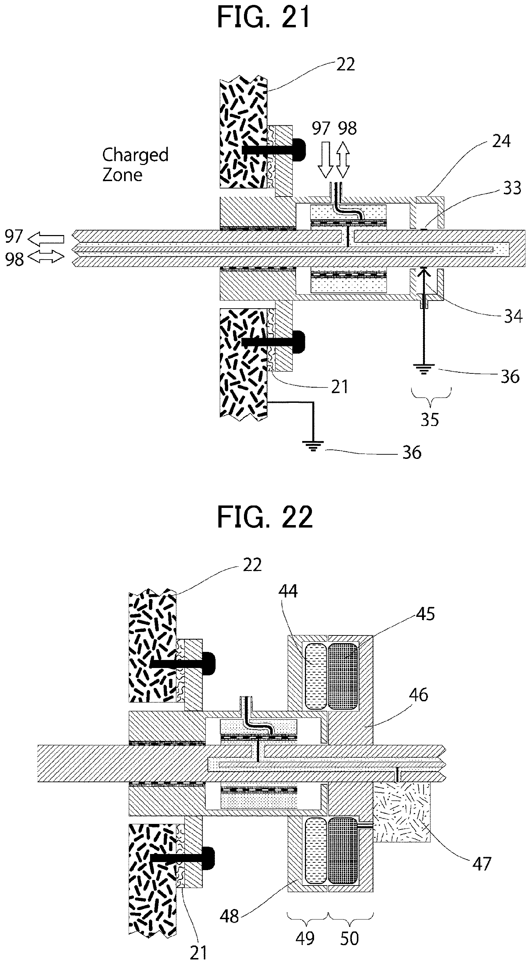

FIG. 21 is a diagram illustrating a configuration of a power supply system to which a slip ring extension unit is attached. The power supply system illustrated in FIG. 21 is used when a slip ring extension unit is attached. The inner side of the isolation wall 22 is set to a power-feeding zone in which charge is accumulated so that non-contact power feeding can be performed, and the outer side of the isolation wall 22 is set to a harmless state. This power supply system has substantially the same configuration as the power supply system illustrated in FIG. 17, and a slip ring extension block 24 is provided instead of the three-stage extension blocks 24. The slip ring extension block 24 allows the charge accumulated inside the isolation wall 22 to escape outside the isolation wall 22 (although the rotating shaft is considered to have the same function as the slip ring extension block 24, since the rotating shaft itself performs non-contact power feeding, the rotating shaft cannot allow the charge accumulated inside the isolation wall 22 to escape outside the isolation wall 22). A contact electrode is provided inside the slip ring extension block 24. The contact electrode is connected to the rotating shaft and is connected to a ground 36 provided in the slip ring extension block 24 via an opening formed in the slip ring extension block 24. Moreover, the isolation wall 22 is connected to the ground 36. Due to this configuration, when a prescribed amount of charge is accumulated inside the isolation wall 22, since the charge can escape toward the ground 36 via the slip ring extension block 24, it is possible to prevent occurrence of spark discharge inside the isolation wall 22.

FIG. 22 is a diagram illustrating a configuration of a power supply system to which a motor is attached. The power supply system illustrated in FIG. 22 is used when a motor is attached. This power supply system has substantially the same configuration as the power supply system illustrated in FIG. 21, and a motor is provided instead of the slip ring extension block 24. The motor can be formed using a power system such as a generator and a sensor system such as a rotary encoder. In FIG. 22, a motor in which a permanent magnet 44 is attached to a fixing portion 49 and a driving coil 45 is attached to close to a rotating portion 50 and which receives power from the rotating shaft and controls the power is used.

### (5) Configuration of rotating shaft that performs power transmission and communication

Next, a configuration of a rotating shaft that performs power transmission and communication will be described. Hereinabove, although a configuration in which power is transmitted to the rotating shaft via a sliding bearing has been described, power transmission and communication may be performed between mutual coaxial rotating shafts. Hereinafter, a configuration of such a rotating shaft will be described.

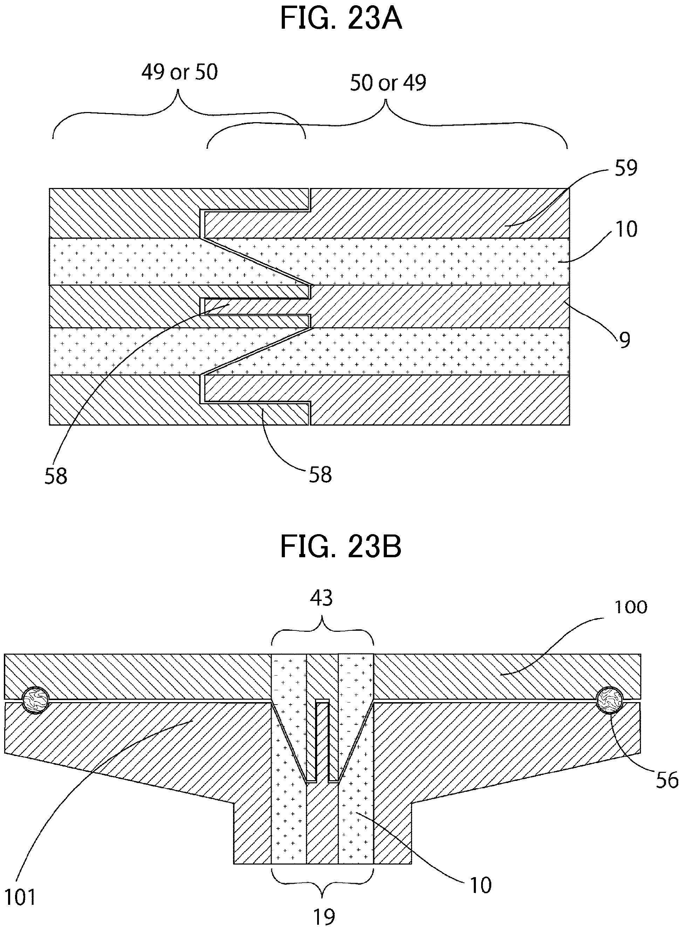

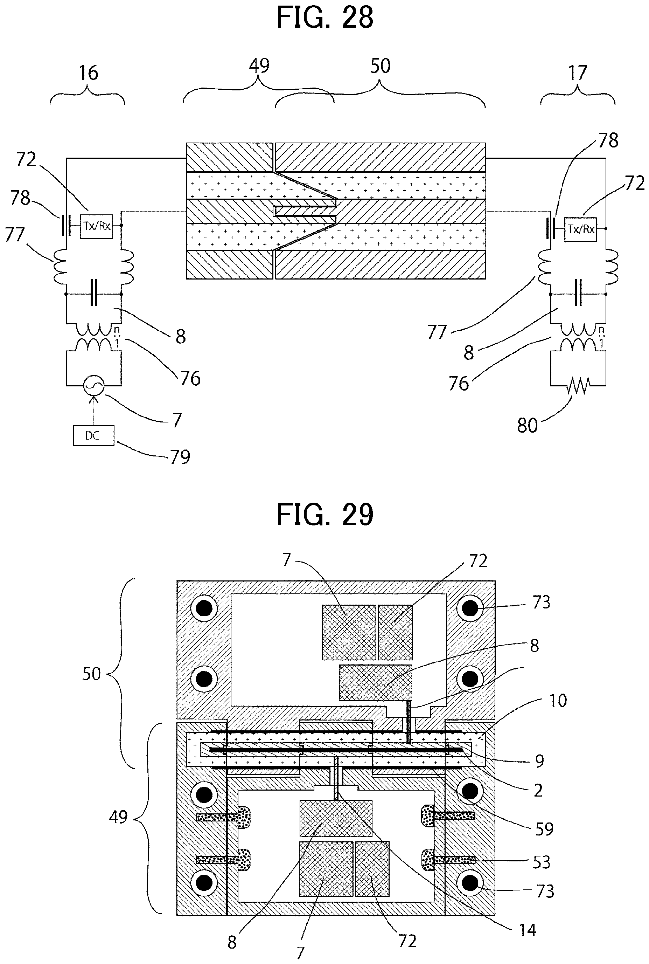

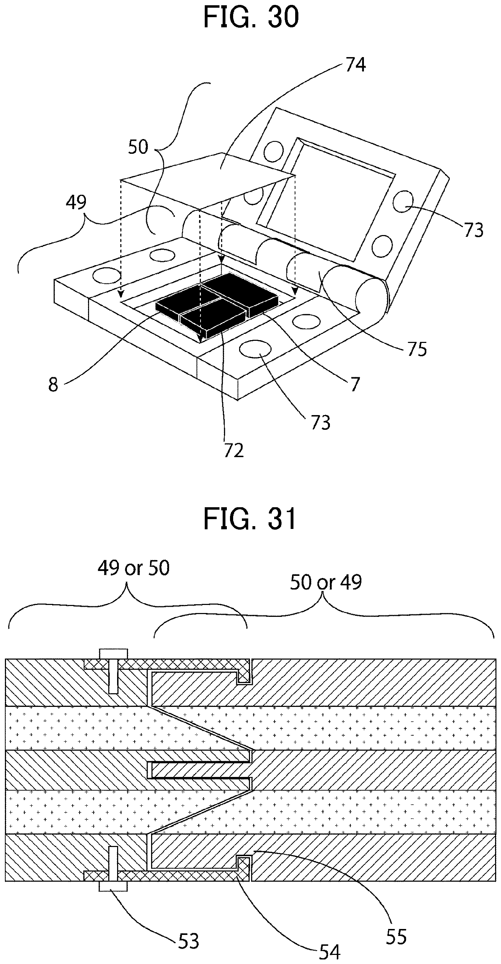

FIGS. 23 to 28 are cross-sectional views illustrating a configuration of a rotating shaft that performs power transmission and communication. FIG. 29 is a schematic view illustrating an example in which a rotating shaft that performs power transmission and communication is applied to a hinge of a door. FIG. 30 is a perspective view of the door illustrated in FIG. 29.

First, two rotating shafts illustrated in FIG. 23 are coupled so that outer conductors 59 and inner conductors 9 are in contact with each other and insulators 10 are separated so as to be in non-contact with each other. Here, the shape of the contact surface of the outer conductors 59 and the inner conductors 9 is set such that a contact area increases so that the mutual outer conductors 59 and the mutual inner conductors 9 can be capacitively coupled and appropriate pressure is applied from the longitudinal direction of the rotating shaft. Specifically, the contact surface has a tooth shape or the like. The contact surface of each of the outer conductors 59 and each of the inner conductors 9 is coated with a sliding material (for example, Teflon (registered trademark), TUFRAM, DLC, or the like). Furthermore an electric wave absorbing member 31 may be arranged between the outer conductors 59 of the two rotating shafts and on the outer circumference of the contact surface of the outer conductor 59. Due to this configuration, the two rotating shafts can rotate mutually at the coupling portions. Moreover, high-frequency current can flow from either one of the two rotating shafts, and communication signals can be transmitted without being limited to power transmission.

Furthermore, according to this configuration, the two rotating shafts can be attached, detached, inserted, and removed in relation to each other about the coupling portion and an arbitrary number of (two or more) rotating shafts can be connected in a plurality of stages like a fishing rod. As a specific example of such an attachment and detachment structure, a structure in which a central conductor and an outer conductor are fitted by inserting and removing the rotating shaft like a fishing rod, a structure in which a fixing tool is provided on the outer side of an outer conductor and the mutual end surfaces of the outer conductor and the inner conductor having a flat surface or a shallow uneven surface are fitted, and a slide-type structure in which two rotating shafts are fitted by sliding them mutually in an approaching direction from a horizontal direction can be employed. In the case of the slide-type structure, fitting of the outer conductor and the inner conductor does not interfere with the movement in the sliding direction. According to this configuration, when a hinge is attached to an outer side of a coupling portion of each of two coaxial transmission lines, the transmission lines can be folded at the hinge and the power supply system can be applied to the frame of a foldable bicycle, for example. Furthermore, in order to solve a problem that a coupling state of an outer conductor can be easily checked from the outside whereas a coupling state of an inner conductor is not easily checked, a mechanism for allowing the inner conductor to be operated in relation to the outer conductor is attached and a mechanism for compensating for adhesion force using a spring or a magnet is employed.

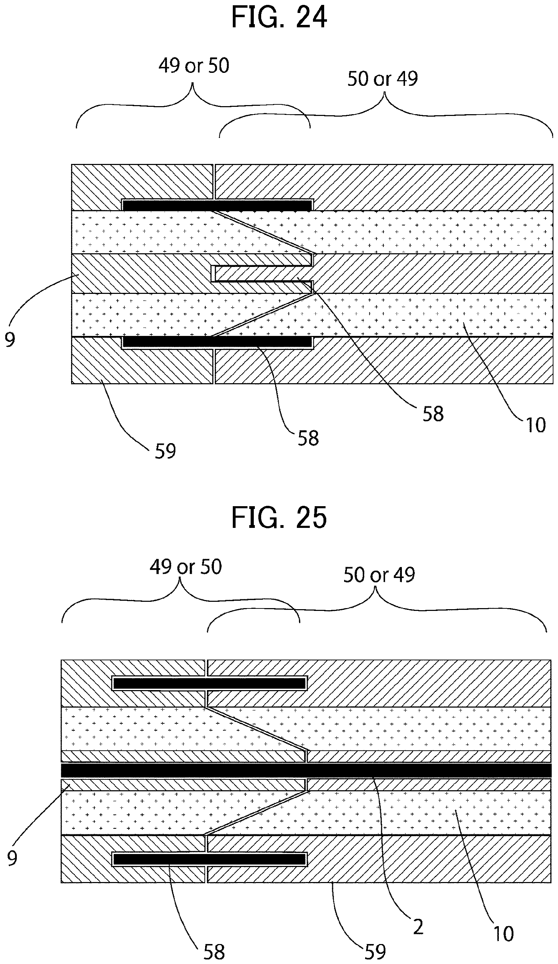

The two rotating shafts illustrated in FIG. 24 have substantially the same configuration as the two rotating shafts illustrated in FIG. 23, and a capacitance coupling portion 58 is added thereto. The capacitance coupling portion 58 is formed of a pipe-shaped good conductor and is disposed in a groove formed in an edge close to the insulator 10, of a contact surface of each of the outer conductors 59 of the two rotating shafts. Specifically, the capacitance coupling portion 58 is disposed to make contact with at least one of the outer conductors 59 of the two rotating shafts. An electric wave absorbing member 31 may be arranged between the capacitance coupling portion 58 which is not in contact with the outer conductor 59 and the outer conductor 59.

The two rotating shafts illustrated in FIG. 25 have substantially the same configuration as the two rotating shafts illustrated in FIG. 24, and the outer conductors 59 and the inner conductors 9 of the two rotating shafts have the following configuration. Specifically, a groove of the contact surface of each of the outer conductors 59 of the two rotating shafts is formed in a central portion of the contact surface. Moreover, the electric wave absorbing member 31 may be arranged on both surfaces of the capacitance coupling portion 58 and a portion corresponding to the groove of the outer conductor 59. In this way, it is possible to double the contact area of the capacitance coupling portion 58. An effect thereof was confirmed by simulation that although charge is generally not accumulated in the groove when the groove is formed in the outer conductor 59, charge is easily accumulated when the capacitance coupling portion 58 is provided in the groove and the contact area of the front and rear surfaces of the capacitance coupling portion 58 is doubled. Furthermore, a through-hole is formed in each inner conductors 9 of the two rotating shafts so as to extend along the longitudinal direction of the inner conductor 9 and a conductive shaft 2 is provided along these through-holes. Due to this, it is possible to increase the capacitance coupling between the inner conductors 9 and to increase the mechanical strength to enable stable rotation.

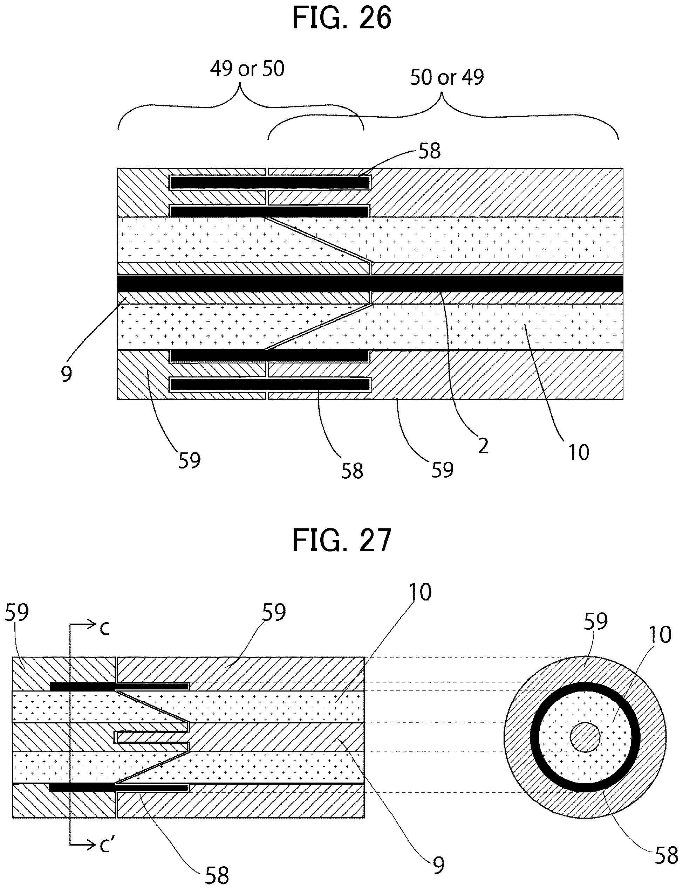

The two rotating shafts illustrated in FIG. 26 combine the configurations illustrated in FIGS. 24 and 25. Due to this configuration, various configurations can be selected depending on a situation.

It is obvious from the cross-sectional view along line C-C of FIG. 24, illustrated in FIG. 27 that the capacitance coupling portion 58 is integrated with the outer conductor 59 of one (the left rotating shaft in the drawing) of the two rotating shafts.

The two rotating shafts illustrated in FIG. 28 have substantially the same configuration as the two rotating shafts illustrated in FIG. 23 and further include a power transmission and communication circuit 16 and a power receiving and communication circuit 17. Specifically, a transmission-side rotating shaft among the two rotating shafts is configured as a fixing portion 49 and the reception-side rotating shaft is configured as a rotating portion 50. The power transmission and communication circuit 16 includes a parallel resonator circuit 8 and a communication choke coil 77 attached to the parallel resonator circuit 8. The power transmission and communication circuit 16 may be configured as a series resonance inductance and the power transmission and communication circuit 16 may include a series resonance circuit and power source and a load 80 only (in this case, a communication circuit is also added as necessary).

By using the above-described configuration in which two rotating shafts are coupled, it is possible to transmit power to a small rotating body. As illustrated in FIGS. 29 and 30, the two rotating shafts illustrated in FIG. 23 are built into a door hinge 75. Specifically, this door hinge 75 includes a fixing portion 49 attached to a pole side and a rotating portion 50 attached to a door side. The fixing portion 49 is attached to the pole by inserting screws through attachment screw holes 73 formed in the fixing portion 49, and the rotating portion 50 is attached to the door by inserting screws through attachment holes formed in the rotating portion 50. In the coupling portion between the fixing portion 49 and the rotating portion 50, a shaft 2 that passes through the entire coupling portion, an inner conductor 9 that forms a nested structure in combination with the shaft 2, and an outer conductor 59 that partially passes through the coupling portion are configured as the shaft of the hinge 75. Moreover, a resonator circuit 8, an inverter 7, and a communication circuit 72 are built into the fixing portion 49, and the resonator circuit 8, the communication circuit 72, and a rectification and charging circuit are buried in the rotating portion 50. A cover 74 for covering the resonator circuit 8, the communication circuit 72, and the inverter 7 is provided in the fixing portion 49. Due to this configuration, it is possible to transmit power and communication signals to the door hinge 75 based on electric field coupling. Therefore, in the case of doors which are frequently open and closed, for example, since it is not necessary to take the influence of disconnection of conductive wires into consideration as compared to transmitting power through conductive wires, it is possible to improve the usability.

The following configuration is employed to fix both the two rotating shafts.

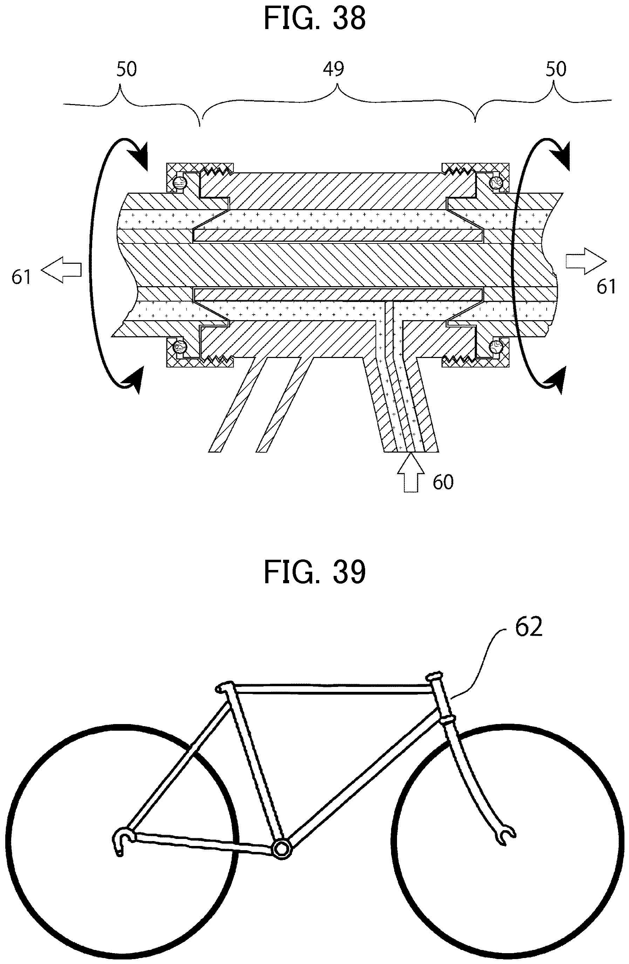

FIGS. 31 to 38 are cross-sectional views illustrating a configuration for fixing both two rotating shafts. FIG. 39 is a schematic view illustrating an example in which the rotating shaft illustrated in FIG. 38 is applied to a bicycle.

The two rotating shafts illustrated in FIG. 31 have substantially the same configuration as the two rotating shafts illustrated in FIG. 23 and further include a spring-type fixing pin 54. The spring-type fixing pin 54 is used for connecting the outer conductors of the two rotating shafts. The spring-type fixing pin 54 is an approximately L-shaped planar member and is formed of an elastic material such as a spring material, for example. Moreover, the spring-type fixing pin 54 is disposed in a hooking groove 55 formed at an edge on a side opposite the insulator 10, of the contact surface of each of the outer conductors of the two rotating shafts. Specifically, the spring-type fixing pin 54 is disposed such that a projection of the spring-type fixing pin 54 is fitted to a groove formed in such a shape that the depth of a portion of the hooking groove 55 facing the projection of the spring-type fixing pin 54 is larger than the depth of other portions, and the portion other than the projection of the spring-type fixing pin 54 makes contact with the outer conductors of the two rotating shafts. A dielectric material may be provided between the hooking groove 55 and the projection of the spring-type fixing pin 54. Due to this configuration, it is possible to obtain a coupling capacitance by allowing the spring-type fixing pin 54 and the outer conductor to make close-contact with each other and to obtain a sufficient coupling capacitance without causing adhesion force to act along a direction in which the two rotating shafts face each other.

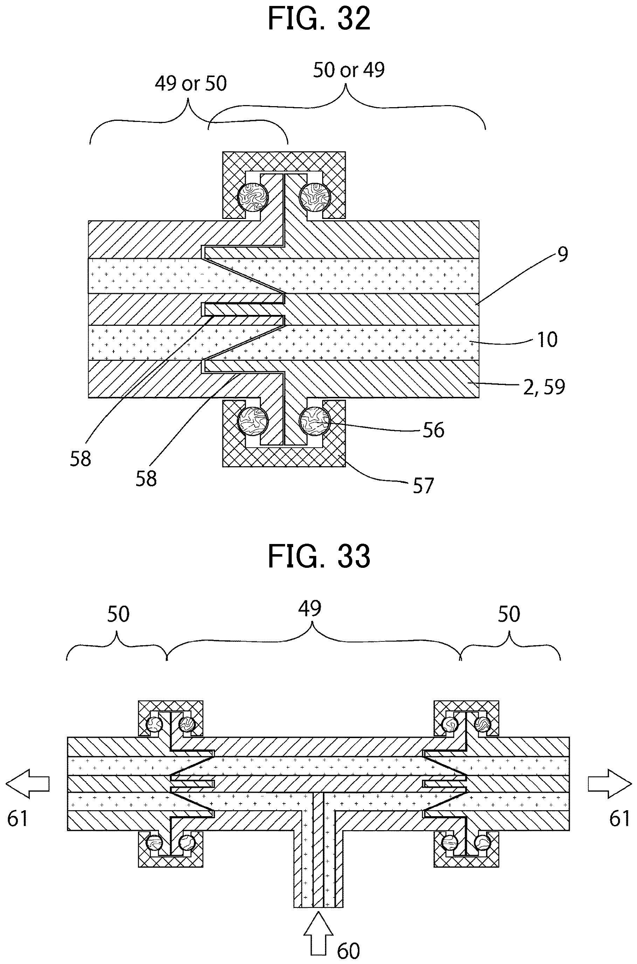

The two rotating shafts illustrated in FIG. 32 have substantially the same configuration as the two rotating shafts illustrated in FIG. 31 and further include a bearing housing 57 and a bearing ball 56. The bearing housing 57 is formed as a ring-shaped member having a concave portion in an inner edge thereof. Moreover, the bearing housing 57 is attached to the outer conductor 59 so that the concave portion of the bearing housing 57 makes contact with the distal end of a projection which is formed at an end close to the contact surface, of each of the outer conductors 59 of the two rotating shafts and which protrudes in a direction approximately orthogonal to the longitudinal direction of the rotating shaft. The bearing ball 56 is attached between the projection of the outer conductor 59 and the bearing housing 57 so that a prescribed pressure is applied to the bearing ball 56 and the bearing ball 56 can rotate. In this case, the contact surface of each of the outer conductors 59 of the two rotating shafts is coated with a sliding material (for example, Teflon (registered trademark), TUFRAM, DLC, or the like), an oil paste, or the like. Due to this configuration, the two rotating shafts can rotate smoothly and the electrostatic capacitance of the two rotating shafts can be stabilized.

The three rotating shafts illustrated in FIG. 33 are configured by taking the configuration of the two rotating shafts illustrated in FIG. 32 into consideration. The three rotating shafts include an approximately T-shaped rotating shaft functioning as the fixing portion 49 and two rotating shafts which are connected to both ends of a horizontal bar portion of the T-shaped rotating shaft and function as the rotating portions 50. Due to this configuration, it is possible to transmit power to the two rotating portions 50 by transmitting power to the fixing portion 49. Although a holder and a shield are not depicted in this drawing, these members may be added as necessary.

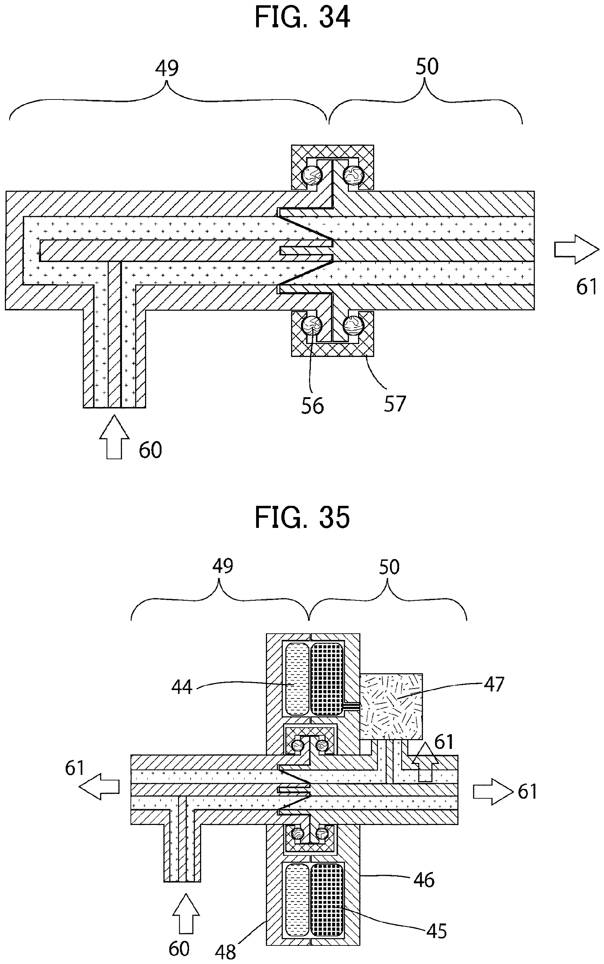

The two rotating shafts illustrated in FIG. 34 are configured by taking the configuration of the two rotating shafts illustrated in FIG. 32 into consideration. The two rotating shafts include an approximately T-shaped rotating shaft functioning as the fixing portion 49 and a rotating shaft connected to one of the ends of the horizontal bar portion of the T-shaped rotating shaft. Due to this configuration, it is possible to transmit power only in a direction from the fixing portion 49 toward the rotating portion 50 by transmitting power to the fixing portion 49.

The two rotating shafts illustrated in FIG. 35 have substantially the same configuration as the two rotating shafts illustrated in FIG. 32 and further include a motor. The motor includes a rotor housing 46, a stator housing 48, a permanent magnet 44, a driving coil 45, and a motor controller 47. The rotor housing 46 is disposed close to the rotating portion 50 so as to cover the bearing housing 57. The stator housing 48 is disposed close to the fixing portion 49 so as to cover the bearing housing 57. Moreover, the permanent magnet 44 is disposed inside the stator housing 48 and the driving coil 45 is disposed inside the rotor housing 46. Moreover, the motor controller 47 is disposed at a position near the rotor housing 46 close to the rotating portion 50 so as to make contact with the rotating shaft. Due to this configuration, it is possible to transmit power toward the rotating portion 50 by transmitting power to the fixing portion 49. Moreover, a portion of the transmitted power can be used for driving the motor. Furthermore, since the rotating portion 50 can be used as a generator and the power generated by the generator can be transmitted to the fixing portion 49, the power supply system can be applied to an aerogenerator or the like for example.

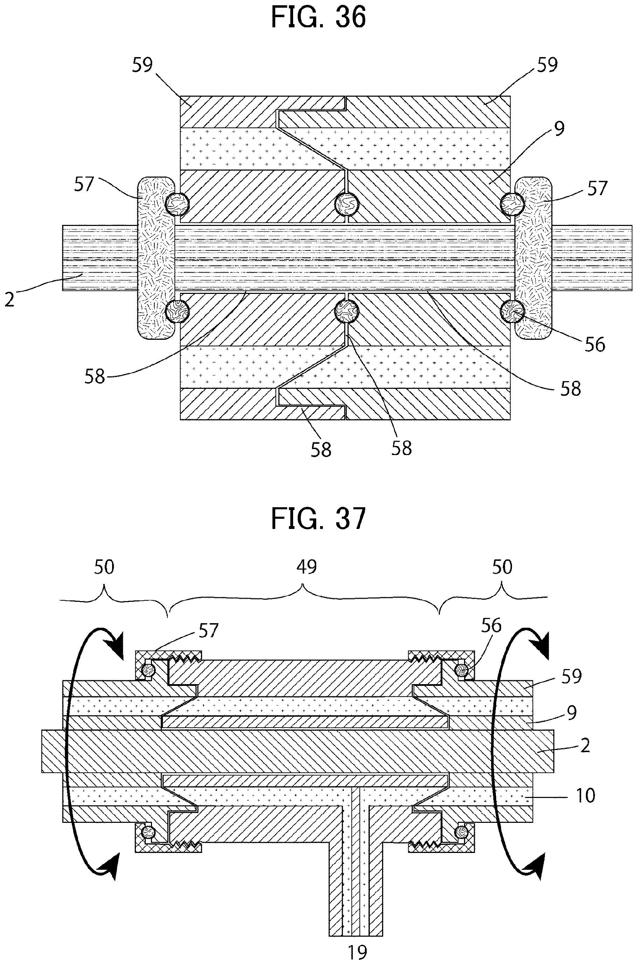

The two rotating shafts illustrated in FIG. 36 have substantially the same configuration as the two rotating shafts illustrated in FIG. 23, and the inner conductors 9 of the two rotating shafts have the following configuration. Specifically, a through-hole that passes along a longitudinal direction of the inner conductor 9 is formed in the inner conductor 9 of each of the two rotating shafts. Moreover, a conductive shaft 2 is provided along these through-holes and the bearing housing 57 is provided at both ends of the shaft. Moreover, the bearing ball 56, a sliding material, and the like are provided between the bearing housing 57 and the rotating shaft or between both of the two rotating shafts as necessary. Due to this configuration, it is possible to fix the two rotating shafts by sandwiching the two rotating shafts using these bearing housings 57.

The two rotating shafts illustrated in FIG. 37 have substantially the same configuration as the two rotating shafts illustrated in FIG. 33, and the inner conductors 9 of the two rotating shafts are configured similarly to the inner conductors 9 of the two rotating shafts illustrated in FIG. 36.

The two rotating shafts illustrated in FIG. 38 are configured so that the two rotating shafts illustrated in FIG. 37 can be applied to a head tube of a motor-assisted bicycle. Since an existing motor-assisted bicycle has electric components which are merely attached to the bicycle, various wires as well as brake wires look unsightly and are arranged around the bicycle and the design property is impaired. Therefore, by applying the two rotating shafts illustrated in FIG. 38 to the pipes of a bicycle, it is possible to provide a good design property.

### (6) Configuration of shaft of telescopic system that performs power transmission and communication

Next, a configuration of a shaft of a telescopic system that performs power transmission and communication will be described. Power transmission and communication can be also performed using coaxial telescopic shafts as long as power transmission and communication can be performed using coaxial rotating shafts as described above. Therefore, the configuration such a shaft will be described below.

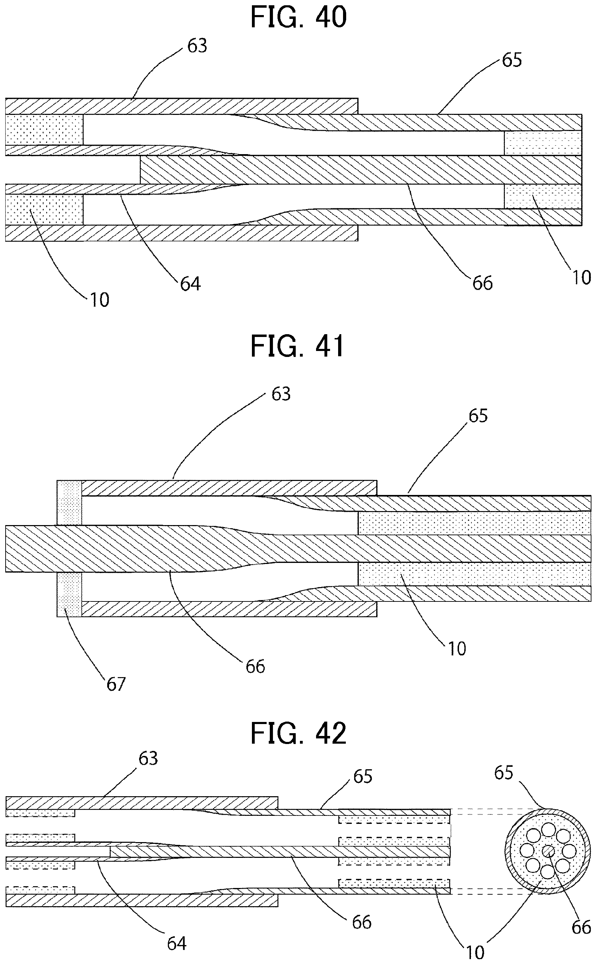

FIGS. 40 to 44 are cross-sectional views illustrating the configuration of a shaft that performs power transmission and communication.

First, as illustrated in FIG. 40, a cylinder-side shaft among the two shafts includes a long cylinder-side inner conductor 64, a long shaped cylinder-side outer conductor 63 disposed on the outer side of the cylinder-side inner conductor 64 in a concentric form in relation to the cylinder-side inner conductor 64, and an insulating and supporting fixing portion 10 disposed between the cylinder-side inner conductor 64 and the cylinder-side outer conductor 63 (specifically, at a position which does not make contact with the piston) so as to insulate mutually the cylinder-side inner conductor 64 and the cylinder-side outer conductor 63. A piston-side shaft among the two shafts includes a long piston-side inner conductor 66, a long shaped piston-side outer conductor 65 disposed on the outer side of the piston-side inner conductor 66 in a concentric form in relation to the piston-side inner conductor 66, and an insulating and supporting fixing portion 10 disposed between the piston-side inner conductor 66 and the piston-side outer conductor 65 (specifically, at a position which does not make contact with the cylinder-side shaft) so as to insulate the piston-side inner conductor 66 and the piston-side outer conductor 65. Moreover, the piston-side shaft has such a shape that the piston-side shaft engages with the cylinder-side shaft (specifically, the outer diameter of the piston-side inner conductor 66 is set to be smaller than the inner diameter of the cylinder-side inner conductor 64, and the outer diameter of the piston-side outer conductor 65 is set to be smaller than the inner diameter of the cylinder-side outer conductor 63). Furthermore, an inner edge of the cylinder-side inner conductor 64 and an outer edge of the piston-side inner conductor 66 are coated with a sliding material. Similarly, an inner edge of the cylinder-side outer conductor 63 and an outer edge of the piston-side outer conductor 65 are coated with a sliding material. Due to this configuration, the cylinder-side shaft and the piston-side shaft can have a large electrostatic capacitance and can be used as a piston, a suspension, and a telescopic power transmission line and can transmit communication signals simultaneously. Although not illustrated in the drawing, one or a plurality of engaging troughs (grooves) and ridges (projections extending in the longitudinal direction) extending in the longitudinal direction may be formed in the contact surface between the cylinder-side inner conductor 64 and the piston-side inner conductor 66 and the contact surface between the cylinder-side outer conductor 63 and the piston-side outer conductor 65 to increase the contact area and to prevent rotation.

The two shafts illustrated in FIG. 41 have substantially the same configuration as the two shafts illustrated in FIG. 40, and the cylinder-side inner conductor 64 is included in the piston-side inner conductor 66. In such a case, the change in characteristic impedance is small as compared to the two shafts illustrated in FIG. 40.
(Alternatively, the piston-side inner conductor 66 may be included in the cylinder-side inner conductor 64 without being limited to this. In such a case, the characteristic impedance varies greatly as compared to the two shafts illustrated in FIG. 40. Due to this, by monitoring transmission of radio waves, the positional relation between the piston and the cylinder can be understood).

The two shafts illustrated in FIG. 42 have substantially the same configuration as the two shafts illustrated in FIG. 40, and a plurality of through-holes extending approximately in the longitudinal direction of the shaft is formed inside the insulating and supporting fixing portion 10 of each of the two shafts. The shape in the longitudinal direction of these through-holes is set to a linear shape (alternatively, an approximately circular-arc shape). Due to this configuration, for example, the insulating and supporting fixing portion 10 can be used as a telescopic connector without blocking the through-holes of the insulating and supporting fixing portion 10 and can be used as an air suspension by blocking the through-holes of the insulating and supporting fixing portion 10 and shutting air therein. Moreover, the insulating and supporting fixing portion 10 can be used as a piston that extends and contracts the two shafts by filling oil or the like into the through-holes of the insulating and supporting fixing portions 10.

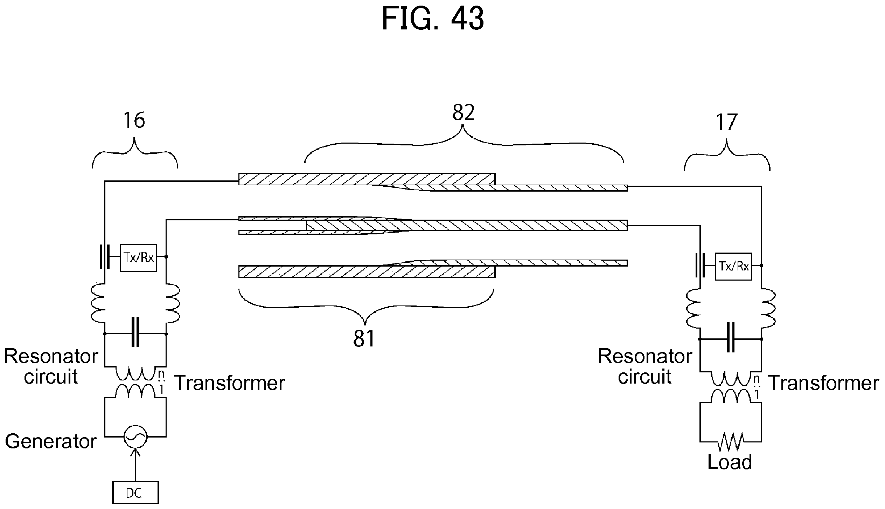

The two shafts illustrated in FIG. 43 have substantially the same configuration as the two shafts illustrated in FIG. 40 and further include a power transmission and communication circuit 16 and a power receiving and communication circuit 17 (the insulating and supporting fixing portion 10 is not illustrated in the drawing). Here, the power transmission and communication circuit 16 includes a parallel resonator circuit. This is because a series resonator circuit cannot be used as a driving circuit since the coupling capacitance varies greatly depending on the positional relation between the shaft of a cylinder portion 81 and the shaft of a piston portion 82. However, the series resonator circuit is more suitable than the parallel resonator circuit when power is transmitted only when the positional relation between the shaft of the piston portion 82 and the shaft of the cylinder portion 81 is in a prescribed relation.

As illustrated in FIG. 43, a configuration in which the shaft of a non-coaxial piston portion 82 and the shaft of a non-coaxial cylinder portion 81 are used in parallel may be considered. In the case of the coaxial shafts illustrated in FIGS. 40 to 43, since current flows between the outer conductor and the inner conductor 9, it is safe even when a person touches the shafts with his or her hand. However, in the case of the configuration illustrated in FIG. 43, since the shafts function as balanced two-wire lines, current flows on the surface of the shaft (specifically, a conductor) of the piston portion 82 and the shaft (specifically, a conductor) of the cylinder portion 81. Due to this, a person gets a shock if the person touches the two lines simultaneously with his or her hand. As a countermeasure, the shafts may be applied to a position which is not easily touched by the hands of a person, or the surfaces of the shafts of the piston portion 82 and the cylinder portion 81 are coated with an insulating layer. Moreover, when the outer surface of the shaft of the piston portion 82 is coated and the inner surface of the shaft of the cylinder portion 81 is coated, although the coupling capacitance decreases, it is possible to maintain power transmission efficiency by using a parallel resonator circuit.

### (7) Configuration of wire

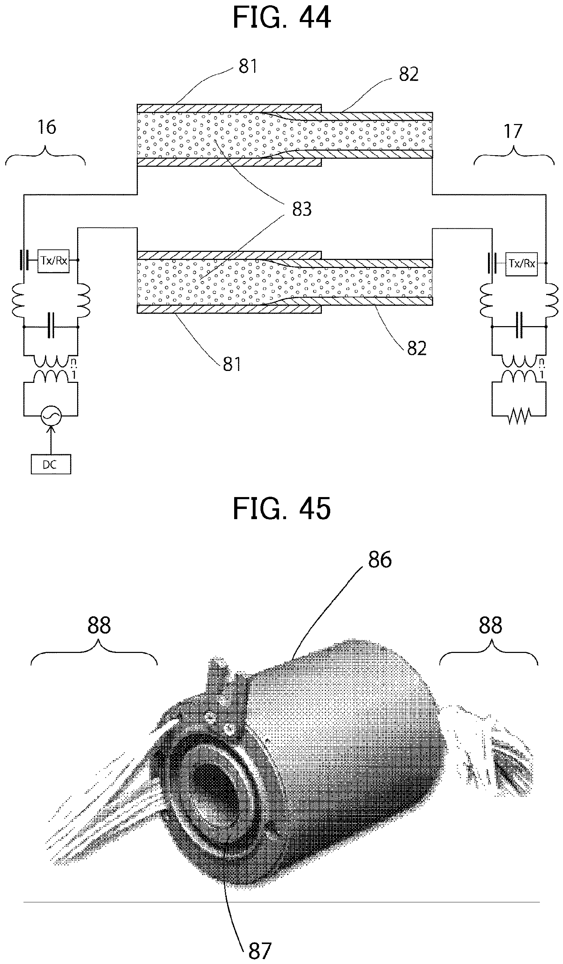

Next, a configuration of a wire will be described. FIG. 45 is a perspective view illustrating a slip ring. As illustrated in FIG. 45, an existing slip ring includes a slip ring fixing portion 86, a slip ring rotating portion 87, and an input and output cable 88. Moreover, since a plurality of sets of collector rings and brushes are built into an existing slip ring, wires are drawn according to the respective sets. This wiring is determined based on the structure of the slip ring. This is because it is necessary to combine a plurality of sets of collector rings and brushes to transmit necessary power since a combination of one set of collector ring and brush has a limited power transmission capability. However, when power is transmitted to a rotating shaft and a load attached to the rotating shaft and there are a number of wires, it is difficult to handle the wires and integrate a high-speed communication system. A configuration of a wiring for solving the problems of the existing slip ring will be described below.

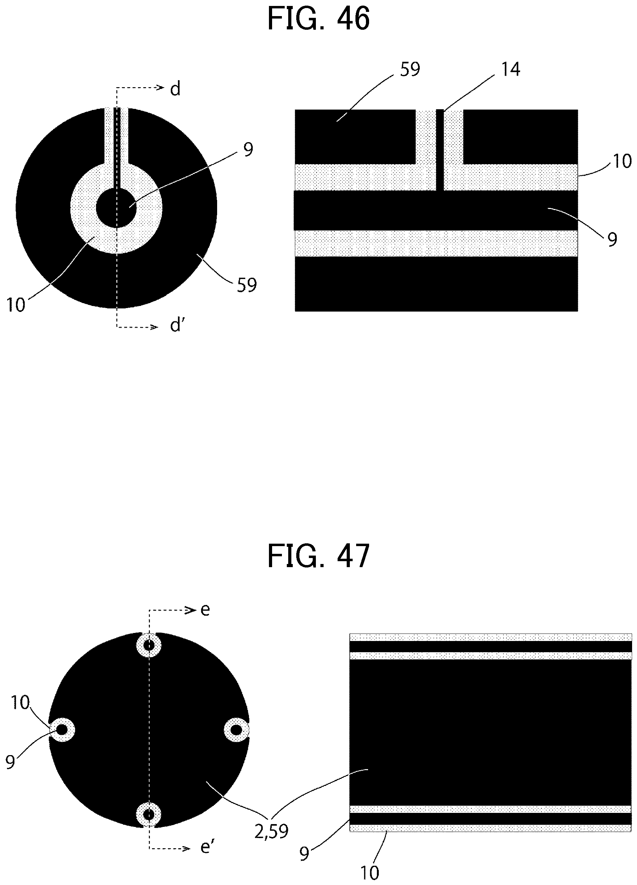

FIGS. 46 to 49 are diagrams illustrating a configuration of a wiring.

First, the configuration of a wiring illustrated in FIG. 46 is used in the above-described rotating shaft, and the rotating shaft has a coaxial line structure. Specifically, this rotating shaft includes a portion which provides mechanical strength as a rotating bearing and functions as an outer conductor, a portion which functions as the inner conductor 9, and the insulator 10 which supports the inner conductor 9, insulates the outer conductor 59 and the inner conductor 9, and performs the role of propagating electromagnetic waves. Moreover, in order to input and output power or communication signals, the connecting conductive wire 14 connected to the inner conductor 9 via a through-hole formed in the outer conductor 59 and the insulator 10 for sealing the inside of the through-hole are provided at a power-transmitting position and a plurality of power-receiving positions of the rotating shaft. In this case, when the position of a load changes and if it is difficult to transmit power from an existing power-receiving position to the load, it is necessary to form a new through-hole and to install the connecting conductive wire 14.

Therefore, in the configuration of a wiring illustrated in FIG. 47, a coaxial line is buried in a groove formed in the surface of the outer conductor 59 of the rotating shaft. Moreover, the coaxial line is disposed so as to be partially exposed from the rotating shaft to the outside. Here, as for a method of forming the coaxial line, for example, a method of, after burrowing a bag-shaped groove in a surface of a rotating shaft (using a special tool) and burying a vinyl-coated conductive wire in the groove or a method of burying a non-coated coaxial line in the groove may be used. Moreover, as illustrated in the drawing on the right side of FIG. 47, the depth of the groove is set to such a depth that, when the rotating shaft is installed in the bearing, the insulating portion of the coaxial line is not cut. Due to this configuration, since power can be input and output when a pin thrusts into the inner conductor 9 of the coaxial line via the exposed portion of the coaxial line and makes contact with the outer conductor 59, it is possible to freely add or change the power-receiving position.

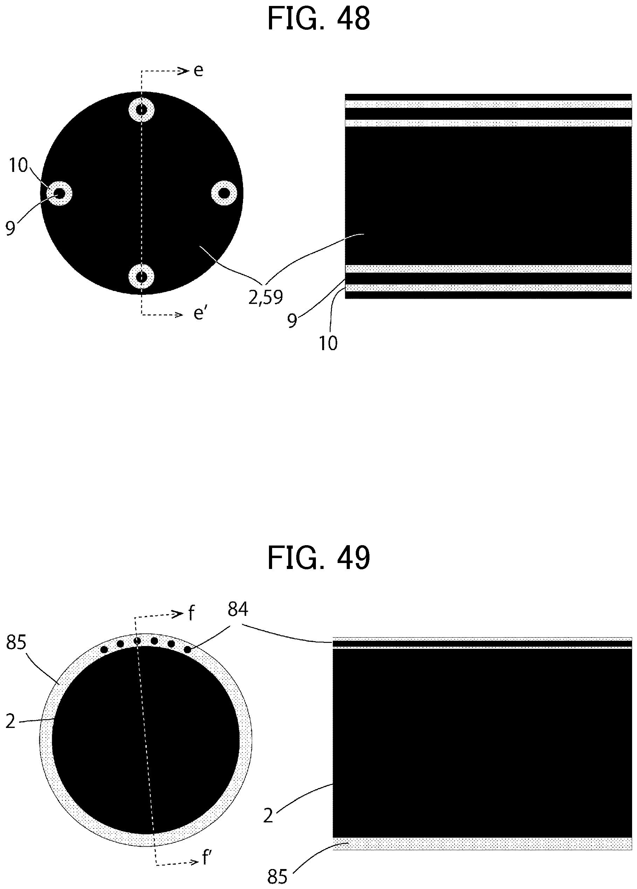

The wiring configuration illustrated in FIG. 48 has substantially the same configuration as the configuration of the wire illustrated in FIG. 47, and the coaxial line is disposed so as to be covered by the outer conductor 59 (that is, the coaxial line is disposed in a non-exposed state). Here, specifically, the depth of the coaxial line is set at a position near the surface of the outer conductor 59 (more specifically, the depth is set to be approximately equal to the length between the inner conductor 9 and the outer conductor 59 of each coaxial line). Here, as for a method of forming the coaxial line, for example, a method of, after opening a hole in a surface of a rotating shaft and inserting a vinyl-coated conductive wire into the hole or a method of inserting a non-coated coaxial line into the hole may be used. Due to this configuration, when a hole is opened in a portion of the outer conductor 59 of the rotating shaft using a drill or the like, it is possible to easily input and output power. Therefore, it is possible to freely add or change a power-receiving position. Moreover, the rotating shaft can be used similarly to a general metallic rotating shaft.

In the configuration of the wirring illustrated in FIG. 49, an insulating coating 85 is formed on an outer edge portion of the rotating shaft and a plurality of conductive wires 84 are disposed in parallel inside the insulating coating 85. Due to this configuration, when a hole is opened at an arbitrary position of the insulating coating 85 and device on the shaft contact with the conductive wire 84, it is possible to input and output power at an arbitrary position.

### (8) Configuration of power supply system which uses rolling bearing

Next, a configuration of a power supply system which uses a rolling bearing will be described. Although a sliding bearing is used in a power supply system in the above embodiments, a rolling bearing can be used instead of the sliding bearing. Hereinafter, a configuration which uses a rolling bearing will be described.

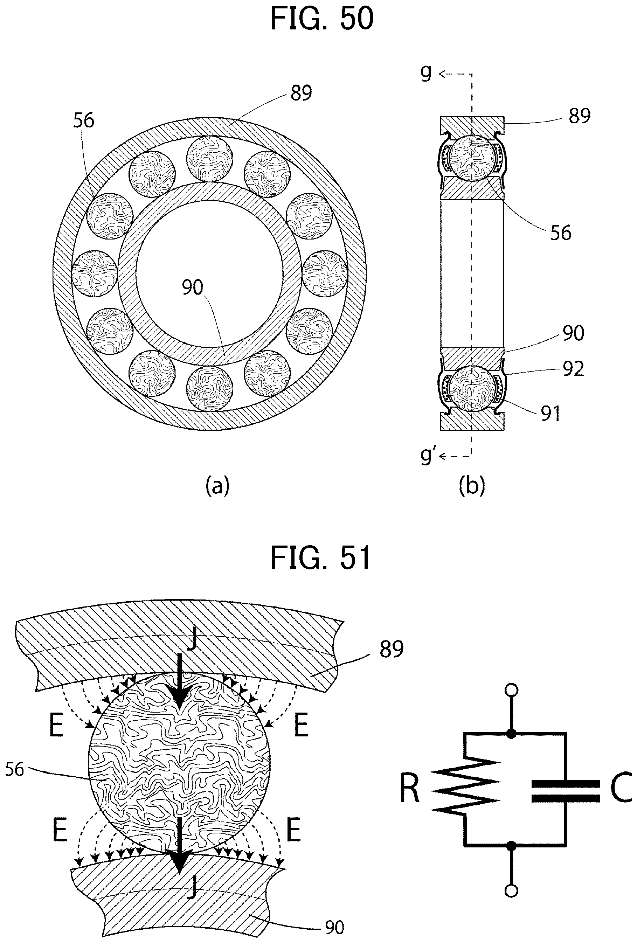

FIGS. 50A and 50B are cross-sectional views illustrating a configuration of a power supply system which uses a rolling bearing. The power supply system illustrated in FIGS. 50A and 50B uses a ball bearing which is one type of rolling bearings. This rolling bearing includes a ring-shaped rolling bearing inner ring 90, a rolling bearing outer ring 89 disposed on the outer side of the rolling bearing inner ring 90 in a concentric form in relation to the rolling bearing inner ring 90, and a bearing ball 56 (or a cylindrical roller or the like) provided between the rolling bearing inner ring 90 and the rolling bearing outer ring 89. Moreover, a holder 91 for preventing the bearing balls 56 from rubbing against each other is attached around the bearing ball 56. Furthermore, a shield 92 for preventing leakage of lubricating grease filled between the bearing ball 56 and the holder 91 is attached to the outer side of the bearing ball 56.

Here, for a rolling bearing, generally, it has been inconceivable to supply power there through One of the reasons therefore is that, when a current (DC or commercial-frequency current) flows into the bearing portion, the portions of the rolling bearing inner ring 90 and the rolling bearing outer ring 89 making contact with the bearing ball 56 are damaged due to electrolytic corrosion. There have been some reports thereof. However, since the ball bearing itself is often formed of a conductive metal, it may be possible to supply weak current or high-frequency current thereto. Particularly, when high-frequency current flows thereto, since the polarity changes at high speed, electrolytic corrosion may not occur. Therefore, it may be possible to supply high-frequency current as it is.

FIG. 51 is a diagram illustrating the flow of current and an electric field around one bearing ball 56 when high-frequency current flows into a general rolling bearing and an equivalent circuit thereof. As illustrated in FIG. 51, the bearing ball 56 makes point-contact with the rolling bearing inner ring 90 and the rolling bearing outer ring 89. Moreover, a capacitor in which the inter-electrode distance is short, is formed near each of the contact points. The capacitor formed between the bearing ball 56 and the rolling bearing outer ring 89 is connected in series to the bearing ball 56 and the rolling bearing outer ring 89. Furthermore, the capacitor formed between the bearing ball 56 and the rolling bearing inner ring 90 is connected in series to the bearing ball 56 and the rolling bearing inner ring 90. That is, the equivalent circuit in the drawing is obtained. Here, since the contact portion of the bearing roller is linear, the capacitance of the capacitor thereof is larger than that of the bearing ball 56. That is, it can be said that it is possible to more easily transmit power through the roller bearing than the ball bearing. However, the sliding surface of the rolling bearing is coated with lubricating oil and a clearance space is also present. Moreover, when the number of rotations of a shaft (specifically, the bearing ball 56 or the bearing roller) increases, since an oil film is present between the shaft and the rolling bearing inner ring 90 and between shaft and the rolling bearing outer ring 89, conductive current decreases and displacement current increases. Furthermore, due to the clearance space, the position of the clearance space changes with rotation of the shaft. Due to this, the equivalent circuit changes according to the number of rotations of the shaft and also changes according to the magnitude of the load applied from the shaft.

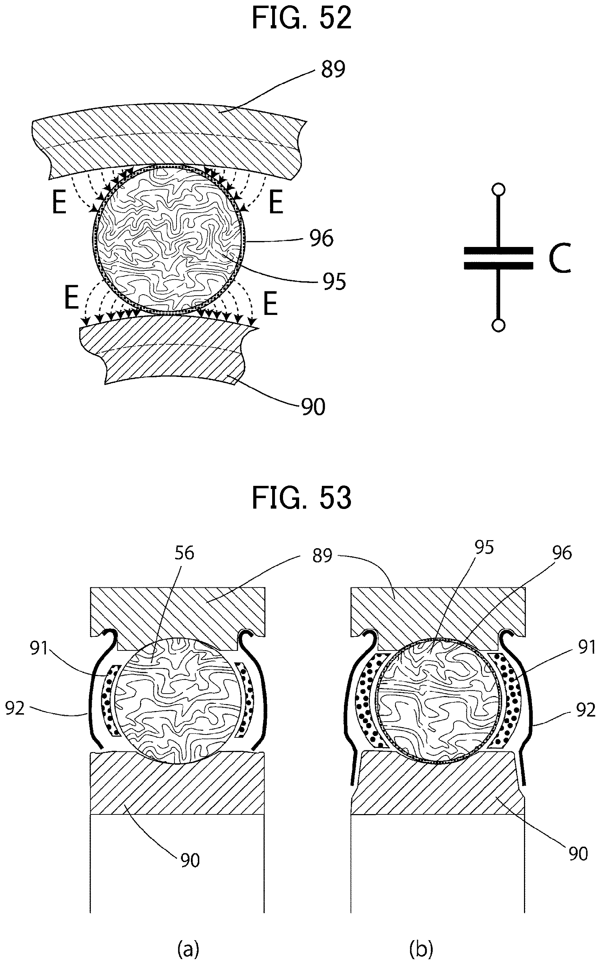

FIG. 52 is a diagram illustrating the bearing ball 56 or a bearing roller coated with an insulating layer 96. As illustrated in FIG. 52, the insulating layer 96 is formed as an insulating film such as DLC, and the bearing ball 56 or the bearing roller may be coated with the insulating layer 96. With this configuration, it is possible to lose conductive current which varies with rotation of the shaft and to transmit power using displacement current only. Moreover, in the equivalent circuit, the capacitances at respective positions are collectively denoted by a capacitor. Naturally, although an oil film may be interposed depending on the number of rotations of the shaft and the capacitances at respective positions change, the capacitances may not change greatly since, when one capacitance increases, the capacitance of a contact portion between the shaft and the rolling bearing inner ring 90 (or the rolling bearing outer ring 89) decreases.

FIGS. 53A and 53B illustrate the bearing ball 56 or the bearing roller in which the holder 91 and the shield 92 are provided. Although the bearing ball 56 or the bearing roller illustrated in FIG. 53A includes the holder 91 and the shield 92, the holder 91 and the shield 92 are not attached by taking advantage of electric field coupling-based power transmission into consideration. On the other hand, in the bearing ball 56 or the bearing roller illustrated in FIG. 53B, the shapes of the holder 91 and the shield 92 are set in the following manner. Specifically, the shape of the holder 91 is set such that the electrostatic capacitance is relatively large at both or at one of the rolling bearing inner ring 90 and the rolling bearing outer ring 89. Moreover, the shape of the holder 91 is set such that the area of a contact portion between the holder 91 and the bearing ball 56 or between the holder 91 and the bearing roller is relatively large. Furthermore, the shape of the shield 92 is set such that one end of the shield 92 makes contact with the rolling bearing inner ring 90 or the rolling bearing outer ring 89, the other end of the shield 92 is in close proximity but not making contact with the rolling bearing inner ring 90 or the rolling bearing outer ring 89, and the area of a surface facing the rolling bearing inner ring 90 or the rolling bearing outer ring 89 is relatively large. The other end of the shield 92 being in close proximity to the rolling bearing inner ring 90 or the rolling bearing outer ring 89 may be coated with a sliding material, and the proximate surface may make contact with the rolling bearing inner ring 90 or the rolling bearing outer ring 89. In this case, since the sliding material is formed of a material having a high dielectric constant, it is possible to increase the coupling capacitance.

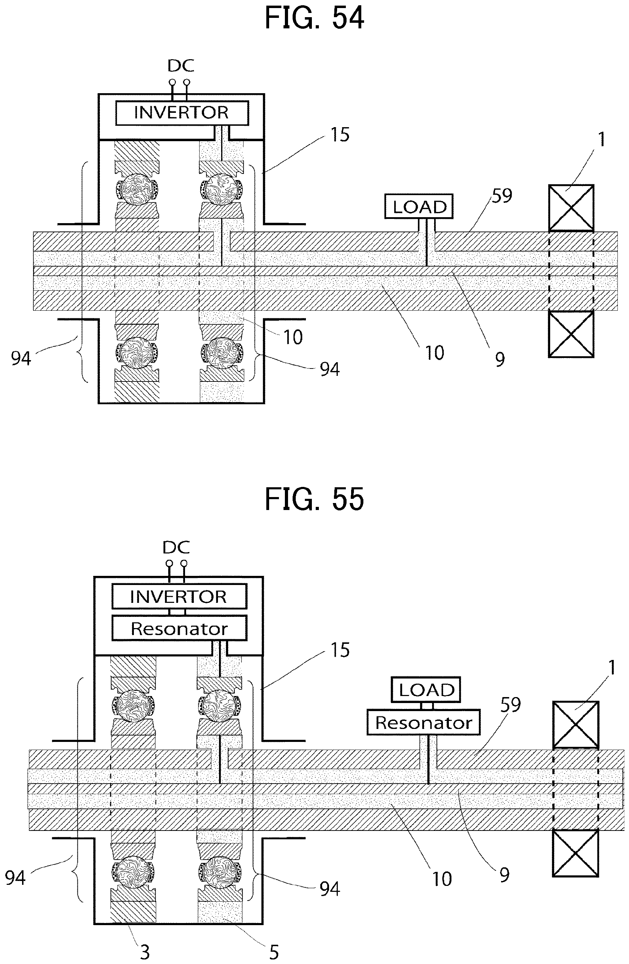

FIG. 54 is a diagram illustrating a configuration in which high-frequency current flows directly into a rolling bearing to transmit power. As illustrated in FIG. 54, the output of an inverter is supplied directly to the rolling bearing 94 not via a resonator circuit or the like.

FIG. 55 is a diagram illustrating a configuration in which power is transmitted to the rolling bearing 94 via a resonator circuit. Even if it is possible to supply high-frequency current directly to the rolling bearing 94, since an oil film is present between a ball (or a roller) and the rings (inner and outer) when the shaft rotates, conductive current decreases and displacement current increases. When a parallel resonator circuit is provided to stabilize the change in the impedance of the coupling portion, it is possible to transmit power stably.

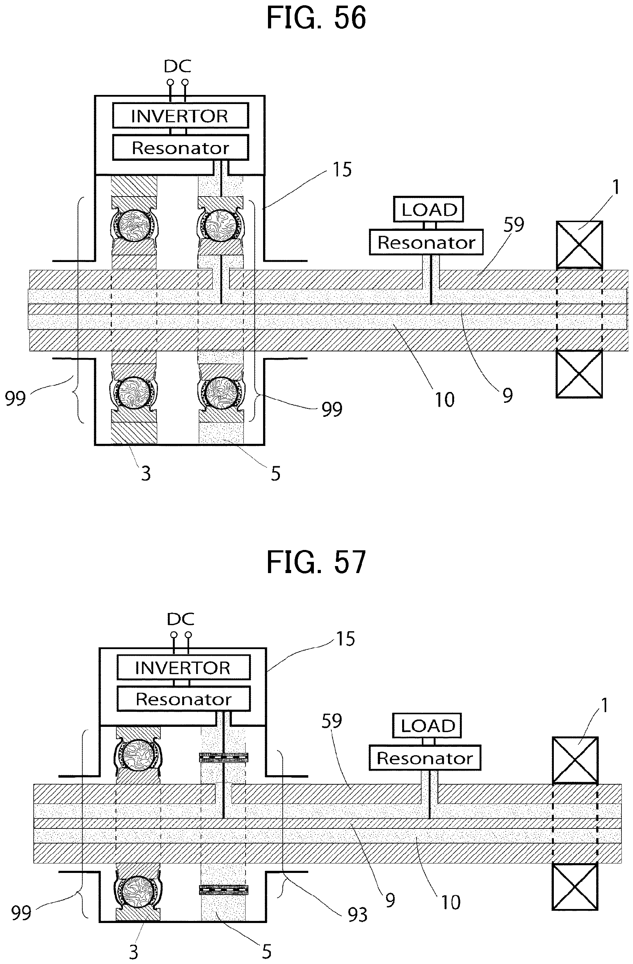

FIG. 56 is a diagram illustrating a configuration in which the rolling bearing 99 is changed to an electric field coupling-type rolling bearing. As illustrated in FIG. 56, since the rolling bearing 99 is changed to an electric field coupling-type rolling bearing, it is possible to transmit power more stably.

FIG. 57 is a diagram illustrating an example in which the rolling bearing 99 and the sliding bearing 93 are combined. The rolling bearing 99 has an advantage that it has less friction (particularly, friction at startup) than the sliding bearing 93. Due to this, although the use of the rolling bearing 94 provides a significant advantage, the thickness of the bearing increases. Moreover, when a bearing is used for supplying power to the inner conductor 9 of a rotating shaft, it is essential to provide an insulating layer between the bearing and the rotating shaft. Therefore, as illustrated in FIG. 56, the size of the power-feeding bearing block increases if the insulating layer is thick. As illustrated in FIG. 57, when the sliding bearing 93 is used as the bearing on the side on which power is supplied to the inner conductor 9 of the rotating shaft, it is possible to decrease the thickness of the bearing. Due to this, it is possible to increase the distance between the sliding bearing inner ring 12 and the rotating shaft, to decrease a parasitic capacitance, and to increase power transmission efficiency.

### Modification for the Embodiments

While the respective embodiments according to the present invention have been described above, the specific configurations and means of the present invention can be arbitrarily modified and improved without departing from the technical concepts of the inventions defined in the appended claims. Hereinafter, such a modification will be described.

### (Problems to be solved and effects of the invention)

First, problems to be solved by the invention and effects of the invention are not limited to those described above, and may be different depending on the environment where the invention is carried out and the details of configurations. In some cases, only some of the above-described problems are solved, and only some of the above-described effects are obtained. Even when power transmission efficiency is decreased lower than a conventional system, when the means of the present invention is different from the means of the conventional system, the problems to be solved by the present invention are solved.

### (Shape, numerical value, structure, and time sequence)

The shapes and the numerical values of constituent elements illustrated in the embodiments and the drawings or the mutual relationships between the structures or time sequences of the plurality of constituent elements may be arbitrarily modified and improved without departing from the technical concepts of the present invention.

### (Rotating shaft)

In the above-described embodiments, although the rotating shaft has been described as being deployed based on a coaxial line structure, portions of the rotating shaft other than the above-mentioned portions may be arbitrarily changed without succession, employing the coaxial line structure as it is. Moreover, the shape or the material of the outer conductor or the inner conductor 9 may be different from the shape and the material of a common coaxial line. Furthermore, some of the configurations of various rotating shafts described above may be omitted. That is, the rotating shaft may be configured as a power-feeding structure in which a communication function is omitted when a power-feeding function only is required and may be configured as a communication structure in which a power-feeding function is omitted when a communication function only is required.

### EXPLANATION OF REFERENCE NUMERALS

- 1:: Bearing
- 2:: Rotating shaft, Shaft
- 3:: Bearing attachment portion
- 4:: Conductive bearing
- 5:: Bearing attachment portion
- 6:: Coupling
- 7:: Inverter
- 8:: Resonator circuit, Parallel resonator circuit
- 9:: Inner conductor
- 10:: Insulator, Insulating and supporting fixing portion
- 11:: Sliding bearing outer ring
- 12:: Sliding bearing inner ring
- 13:: Sliding interface
- 14:: Connecting conductive wire
- 15:: Body
- 16:: Power transmission and communication circuit
- 17:: Power receiving and communication circuit
- 18:: Displaceable sliding bearing outer ring
- 19:: Coaxial input terminal
- 20:: Shaft adhesion rotating disc
- 21:: Packing/Gasket
- 22:: Isolation wall
- 23:: Rotation seal
- 24:: Extension block
- 25:: Agitation fin
- 26:: Neutralizing agent
- 27:: Detoxifying substance
- 28:: Toxic substance leakage prevention unit
- 29:: Exhaust gas
- 30:: Differential exhaust unit
- 31:: Electric wave absorbing member
- 32:: Electromagnetic wave leakage prevention unit
- 33:: Collector ring
- 34:: Contact electrode
- 35:: Slip ring unit
- 36:: Ground
- 37:: Differential high-pressure gas leakage sealing unit
- 38:: Guide plate
- 39:: Guidance groove
- 40:: Rotating groove
- 41:: Gap between body and shaft
- 42:: Sealing plate
- 43:: Output unit
- 44:: Permanent magnet
- 45:: Driving coil
- 46:: Rotor housing
- 47:: Motor controller
- 48:: Stator housing
- 49:: Fixing portion
- 50:: Rotating portion
- 51:: Gimbals
- 52:: Power-feeding bearing block
- 53:: Locking screw
- 54:: Spring-type fixing pin
- 55:: Hooking groove
- 56:: Bearing ball
- 57:: Bearing housing
- 58:: Capacitance coupling portion
- 59:: Outer conductor
- 60:: Input
- 61:: Output
- 62:: Head tube
- 63:: Cylinder-side outer conductor
- 64:: Cylinder-side inner conductor
- 65:: Piston-side outer conductor
- 66:: Piston-side inner conductor
- 67:: Insulated cylinder head
- 68:: Cylinder-side outer insulating support and fixing
- 69:: Cylinder-side inner insulating support and fixing
- 70:: Piston-side outer insulating support and fixing
- 71:: Piston-side outer insulating support and fixing
- 72:: Communication circuit
- 73:: Attachment screw hole
- 74:: Cover
- 75:: Hinge
- 76:: Transformer
- 77:: Choke coil
- 78:: Coupling capacitor
- 79:: DC power source
- 80:: Load
- 81:: Cylinder portion
- 82:: Piston portion
- 83:: Oil
- 84:: Conductive wire
- 85:: Insulating coating
- 86:: Slip fixing portion
- 87:: Slip rotating portion
- 88:: Input and output cable
- 89:: Rolling bearing outer ring
- 90:: Rolling bearing inner ring
- 91:: Holder
- 92:: Shield
- 93:: Sliding bearing
- 94:: Rolling bearing
- 95:: Metal portion of bearing ball or roller
- 96:: Outer insulating layer of bearing ball or roller
- 97:: Power
- 98:: Signal
- 99:: Rolling bearing

## Claims

1. A power supply system that supplies power from an AC power source to a prescribed load via a shaft supported by a first bearing and a second bearing, wherein
the shaft includes:
an inner shaft conductor disposed along an axial direction;
an outer shaft conductor disposed along the axial direction so as to cover the inner conductor; and
a shaft insulator disposed between the inner shaft conductor and the outer shaft conductor,
the first bearing includes:
a first bearing body that receives a load of the shaft;
a first outer bearing fixed at a position of the first bearing body facing an outer circumferential surface of the outer shaft conductor; and
a first sliding insulating layer disposed mutually between the first outer bearing and the outer shaft conductor,
the second bearing includes:
a second insulating layer fixed to an outer circumferential surface of the outer shaft conductor;
a second inner bearing fixed to an outer circumferential surface of the second insulating layer;
a second outer bearing disposed at a position facing the second inner bearing;
a second sliding insulating layer disposed mutually between the second inner bearing and the second outer bearing;
a second outer wire connected to the second outer bearing; and
a second inner wire that electrically connects the second inner bearing and the inner shaft conductor via a wire hole formed in the outer shaft conductor,
power can be transmitted between the first bearing body and the outer shaft conductor via a first coupling capacitor that is composed of the first outer bearing, the first sliding insulating layer, and the outer shaft conductor, and
power can be transmitted between the second outer wire and the inner shaft conductor via a second coupling capacitor that is composed of the second outer bearing, the second sliding insulating layer, and the second inner bearing.
